(19) **Europäisches Patentamt**
**European Patent Office**
**Office européen des brevets**

(11) **EP 4 415 239 A1**

(12) # EUROPEAN PATENT APPLICATION
published in accordance with Art. 153(4) EPC

(43) Date of publication:
**14.08.2024 Bulletin 2024/33**

(21) Application number: **22878403.9**

(22) Date of filing: **28.09.2022**

(51) International Patent Classification (IPC):
**H02M 1/12** (2006.01)     **F24F 11/65** (2018.01)
**G05F 1/70** (2006.01)     **H02J 3/16** (2006.01)
**H02M 7/48** (2007.01)

(52) Cooperative Patent Classification (CPC):
**F24F 11/46; F24F 11/58; F24F 11/61; F24F 11/65;
F24F 11/70; F24F 11/88; G05F 1/70; H02J 3/01;
H02J 3/16; H02M 1/12; H02M 7/48;** Y02E 40/30

(86) International application number:
**PCT/JP2022/036255**

(87) International publication number:
**WO 2023/058533 (13.04.2023 Gazette 2023/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.10.2021   JP 2021164213**
**08.03.2022   JP 2022035691**

(71) Applicant: **DAIKIN INDUSTRIES, LTD.**
**Osaka 530-0001 (JP)**

(72) Inventors:
• **KONO, Masaki**
  **Osaka-shi, Osaka 530-0001 (JP)**
• **KAWASHIMA, Reiji**
  **Osaka-shi, Osaka 530-0001 (JP)**
• **OTA, Keisuke**
  **Osaka-shi, Osaka 530-0001 (JP)**

(74) Representative: **Hoffmann Eitle**
**Patent- und Rechtsanwälte PartmbB**
**Arabellastraße 30**
**81925 München (DE)**

(54)   **AIR CONDITIONER AND CONTROL SYSTEM**

(57)   [Object]
To suppress the input of a voltage deviating from a predetermined magnitude range to an air conditioner, as compared to a configuration in which the air conditioner does not perform an operation according to the magnitude of the input voltage.
[Solution]
An air conditioner includes a voltage information acquisition section that acquires voltage information related to an input voltage input to the air conditioner, a supply section that supplies fundamental reactive power to a power receiving point of the input voltage in the air conditioner, and a control section that controls the supply section. The control section has a first supply mode for supplying the fundamental reactive power from the supply section to the power receiving point in accordance with a magnitude of the input voltage identified from the voltage information acquired by the voltage information acquisition section.

EP 4 415 239 A1

FIG.7

```
                        ┌──────────┐
                        │  START   │
                        └──────────┘
                             │
                             ▼                    S301
                    ╱─────────────────╲   NO
                   ╱  VOLTAGE ADJUSTMENT ╲──────────────┐
                   ╲      MODE?         ╱               │
                    ╲─────────────────╱                │
                             │ YES                     │
                             ▼                    S302  │
                    ╱─────────────────╲   NO            │
                   ╱   SUBTRACTION      ╲───────────────┤
                   ╲    VALUE > 0?     ╱                │
                    ╲─────────────────╱                │
                             │ YES                     │
                             ▼                          │
                 ┌──────────────────────┐  S303         │
                 │ IDENTIFY INPUT VOLTAGE│              │
                 └──────────────────────┘              │
                             │                          │
                             ▼                    S304   │
                    ╱─────────────────╲   NO            │
                   ╱ ADJUSTMENT CONDITION╲──────────────┤
                   ╲    SATISFIED?      ╱               │
                    ╲─────────────────╱                │
                             │ YES                      │
                             ▼                          │
                 ┌──────────────────────┐              │
                 │ CALCULATE ADJUSTMENT- │  S305         │
                 │   REQUIRED POWER      │              │
                 └──────────────────────┘              │
                             │                          │
                             ▼                          │
                 ┌──────────────────────┐              │
                 │ DETERMINE REACTIVE    │  S306         │
                 │   POWER INDEX         │              │
                 └──────────────────────┘              │
                             │                          │
                             ▼                          │
                 ┌──────────────────────┐              │
                 │ PROVIDE INSTRUCTION TO│  S307         │
                 │ SUPPLY FUNDAMENTAL    │              │
                 │  REACTIVE POWER       │              │
                 └──────────────────────┘              │
                             │                          │
                             ▼                          │
                 ┌──────────────────────┐              │
                 │ SUPPLY FUNDAMENTAL    │  S308         │
                 │  REACTIVE POWER       │              │
                 └──────────────────────┘              │
                             │                    S309   │
                             ▼                          │
                    ╱─────────────────╲   NO            │
                   ╱ INPUT VOLTAGE ≤ Ve? ╲──────────────┤
                   ╲                   ╱                │
                    ╲─────────────────╱                │
                             │ YES       S310           │
                             ▼                          │
                 ┌──────────────────────┐              │
                 │ PROVIDE INSTRUCTION TO│              │
                 │  DECREASE POWER       │              │
                 │  TO BE SUPPLIED       │              │
                 └──────────────────────┘              │
                             │◄─────────────────────────┘
                             ▼
                        ┌──────────┐
                        │   END    │
                        └──────────┘
```

**Description**

Technical Field

The present disclosure relates to an air conditioner and a control system.

Background Art

PTL 1 describes that a current source capable of generating a current of a first compensation portion for performing at least one of reduction of a harmonic current and improvement of a fundamental power factor in an air conditioner is provided and that when an excess of the current source is larger than a second compensation portion for performing at least one of reduction of a harmonic current and improvement of a fundamental power factor in a power receiving path of a distribution board, the current source generates a current obtained by superimposition of a current of the second compensation portion and the current of the first compensation portion.

Citation List

Patent Literature

PTL 1: Japanese Patent No. 6299831

Summary of Invention

Technical Problem

A voltage having a predetermined magnitude range may be input to an air conditioner to supply power to the air conditioner. The magnitude of the voltage input to the air conditioner may fluctuate. In this case, if the air conditioner does not perform an operation according to the magnitude of the input voltage, a voltage that deviates from the predetermined magnitude range may be input to the air conditioner.

It is an object of the present disclosure to suppress the input of a voltage deviating from a predetermined magnitude range to an air conditioner, as compared to a configuration in which the air conditioner does not perform an operation according to the magnitude of the input voltage.

Solution to Problem

An air conditioner according to the present disclosure is an air conditioner including a voltage information acquisition section that acquires voltage information related to an input voltage input to the air conditioner, a supply section that supplies fundamental reactive power to a power receiving point of the input voltage in the air conditioner, and a control section that controls the supply section, wherein the control section has a first supply mode for supplying the fundamental reactive power from the supply section to the power receiving point in accordance with a magnitude of the input voltage identified from the voltage information acquired by the voltage information acquisition section. In this case, it is possible to suppress the input of a voltage deviating from a predetermined magnitude range to the air conditioner, as compared to a configuration in which the air conditioner does not perform an operation according to the magnitude of the input voltage.

The supply section may suppress a harmonic generated from the air conditioner. In the first supply mode, the control section may perform first control for causing the supply section to suppress the harmonic generated from the air conditioner or second control for performing the first control and causing the supply section to supply the fundamental reactive power in accordance with the magnitude of the input voltage. In this case, even when it is necessary to suppress the harmonic flow from the air conditioner but it is not necessary to supply the fundamental reactive power to the power receiving point of the air conditioner, it is possible to prevent the fundamental reactive power from being supplied to the power receiving point.

In the first supply mode, the control section may perform the first control when the magnitude of the input voltage does not satisfy a predetermined condition, and perform the second control when the magnitude of the input voltage satisfies the condition. In this case, when causing the supply section to suppress the harmonic flow from the air conditioner, whether to cause the supply section to supply the fundamental reactive power to the power receiving point of the air conditioner can be switched in accordance with the magnitude of the input voltage.

The control section may further have, in the first supply mode, a first mode for causing the supply section to supply the fundamental reactive power in accordance with the magnitude of the input voltage when the magnitude of the input voltage satisfies a predetermined condition, and a second mode for causing the supply section not to supply the fundamental reactive power in accordance with the magnitude of the input voltage even when the magnitude of the input voltage satisfies the condition. In this case, it is possible to suppress the use of the supply section to supply the fundamental reactive power, as compared to a configuration in which the supply section always supplies the fundamental reactive power in accordance with the magnitude of the input voltage when the magnitude of the input voltage satisfies the predetermined condition.

Further, in the first supply mode, the control section may switch to the first mode or the second mode in accordance with a period of time. In this case, it is possible to suppress the use of the supply section to supply the fundamental reactive power, as compared to a configuration in which the supply section supplies the fundamental reactive power in accordance with the magnitude of the input voltage regardless of the period of time.

Further, in the first supply mode, the control section may switch to the first mode or the second mode in accordance with a relationship between the period of time and an operation of the supply section. In this case, it is possible to suppress the use of the supply section to supply the fundamental reactive power, as compared to a configuration in which the supply section supplies the fundamental reactive power in accordance with the magnitude of the input voltage regardless of the relationship between the period of time and the operation of the supply section.

The air conditioner may further include a position information acquisition section that acquires position information related to a position of the air conditioner. In the first supply mode, the control section may switch to the first mode or the second mode in accordance with the position information acquired by the position information acquisition section. In this case, it is possible to suppress the use of the supply section to supply the fundamental reactive power, as compared to a configuration in which the supply section supplies the fundamental reactive power in accordance with the magnitude of the input voltage regardless of a position related to the air conditioner.

The supply section may suppress a harmonic generated from the air conditioner. In the first supply mode, the control section may control the supply section to supply the fundamental reactive power in accordance with suppression of the harmonic by the supply section. In this case, it is possible to reduce the influence of the supply of the fundamental reactive power from the supply section on the suppression of the harmonic by the supply section, as compared to a configuration in which the supply section is controlled to supply the fundamental reactive power regardless of the suppression of the harmonic by the supply section.

Further, in the first supply mode, the control section may determine an index related to the fundamental reactive power to be supplied by the supply section, in accordance with a capacity remaining in the supply section for supply of the fundamental reactive power in a case of the suppression of the harmonic by the supply section. In this case, it is possible to adjust the voltage input to the air conditioner while ensuring the capacity of the supply section required for suppression of the harmonic.

The supply section may suppress a harmonic generated from the air conditioner. In the first supply mode, the control section may perform first control for causing the supply section to suppress the harmonic generated from the air conditioner and third control for causing the supply section to supply the fundamental reactive power in accordance with the magnitude of the input voltage, prioritize the first control over the third control when a first condition defined for the magnitude of the input voltage is satisfied and a second condition defined for the magnitude of the input voltage is not satisfied, and prioritize the third control over the first control when the second condition is satisfied. In this case, which of the control for causing the supply section to suppress the harmonic generated from the air conditioner and the control for causing the supply section to supply the fundamental reactive power in accordance with the magnitude of the input voltage to prioritize can be switched in accordance with the magnitude of the input voltage.

In the first supply mode, the control section may determine an index related to the fundamental reactive power to be supplied by the supply section in accordance with a period of time related to supply of the fundamental reactive power from the supply section. In this case, it is possible to adjust the voltage input to the air conditioner in accordance with the degree of adjustment corresponding to the period of time related to the supply of the fundamental reactive power from the supply section.

The air conditioner may further include a position information acquisition section that acquires position information related to a position of the air conditioner. In the first supply mode, the control section may determine an index related to the fundamental reactive power to be supplied by the supply section in accordance with the position information acquired by the position information acquisition section. In this case, it is possible to adjust the voltage input to the air conditioner in accordance with the degree of adjustment corresponding to a position related to the air conditioner.

In the first supply mode, the control section may suppress consumption of active power by the air conditioner when the input voltage identified from the voltage information is equal to or less than a predetermined value. In this case, it is possible to suppress the input of a voltage deviating from a predetermined magnitude range to the air conditioner, as compared to a configuration in which the air conditioner adjusts the voltage input to the air conditioner only by the supply of the fundamental reactive power.

The air conditioner may further include a detection section that detects a voltage across the air conditioner. The voltage information may be information created from a result of detection of the voltage across the air conditioner, the detection being performed by the detection section. In this case, it is possible for the air conditioner to implement the supply of the fundamental reactive power corresponding to the magnitude of the input voltage without using a detection section different from that of the air conditioner to detect the voltage across the air conditioner.

The air conditioner may further include an adjustment unit that adjusts a temperature or a humidity, and a conversion unit that converts power supplied to the air conditioner and supplies the power to the adjustment unit. The supply section may be an active filter that suppresses a harmonic generated by an operation of the conversion unit. In this case, it is possible to implement the supply of the fundamental reactive power to the power receiving point of the air conditioner even when the adjustment unit and the conversion unit are not in operation.

The fundamental reactive power to be supplied by the supply section may be determined in advance in accordance with the magnitude of the input voltage. In this case, it is possible to prevent the supply section from approaching the operation limit, as compared to a configuration in which the amount of the fundamental reactive power to be supplied from the supply section is increased if the voltage input to the air conditioner is not adjusted even when the supply section supplies the fundamental reactive power.

The air conditioner may further include a power information acquisition section that acquires power information related to apparent power to be output from the air conditioner. The control section may further have a second supply mode for supplying the fundamental reactive power from the supply section to the power receiving point on the basis of the power information. In this case, it is possible to adjust the voltage input to the air conditioner in a mode according to the situation from among the first supply mode and the second supply mode.

Further, the control section may perform control in the first supply mode or the second supply mode in accordance with a condition determined for the power information. In this case, it is possible to adjust the voltage input to the air conditioner in a mode according to the situation for the power information from among the first supply mode and the second supply mode.

Further, the condition may be determined for acquisition of the power information, the acquisition being performed by the power information acquisition section. In this case, it is possible to adjust the voltage input to the air conditioner in a mode according to a situation in which the power information acquisition section acquires the power information from among the first supply mode and the second supply mode.

Further, in a case of switching from the second supply mode to the first supply mode, the control section may cause the supply section to supply the fundamental reactive power to the power receiving point on the basis of mode information related to the second supply mode. In this case, it is possible to associate the supply of the fundamental reactive power by the supply section in the second supply mode with the supply of the fundamental reactive power by the supply section in the first supply mode.

Further, in a case of switching from the second supply mode to the first supply mode, the control section may determine an index related to the fundamental reactive power to be supplied from the supply section to the power receiving point in accordance with a relationship between the mode information and an index related to the supply in the first supply mode determined in accordance with the magnitude of the input voltage. In this case, the supply of the fundamental reactive power by the supply section in the second supply mode and the supply of the fundamental reactive power by the supply section in the first supply mode can be associated with each other in accordance with the relationship between the mode information and the index related to the supply in the first supply mode.

A control system according to the present disclosure includes an acquisition section that acquires electrical path information related to a voltage of an electrical path of a power distribution system electrically connected to an air conditioner through a power distribution transformer; and a control section having a first supply mode for supplying, in accordance with a magnitude of an input voltage input to the air conditioner, fundamental reactive power from the air conditioner to a power receiving point of the input voltage in the air conditioner, and a second supply mode for supplying the fundamental reactive power from the air conditioner to the power receiving point on the basis of the electrical path information. In this case, it is possible to adjust the voltage input to the air conditioner in a mode according to the situation from among the first supply mode and the second supply mode.

Brief Description of Drawings

[Fig. 1] Fig. 1 is a diagram illustrating an example of a voltage adjustment system according to the present embodiment.

[Fig. 2] Fig. 2 is a diagram illustrating an air conditioning management table.

[Fig. 3] Fig. 3 is a diagram illustrating a relationship between an input voltage and a value determined by a supply amount determination unit as a reactive power index.

[Fig. 4] Fig. 4 is a flowchart illustrating a setting process.

[Fig. 5] Fig. 5 is a diagram illustrating a relationship between an input voltage and a value determined by the supply amount determination unit as a reactive power index when the setting process is performed.

[Fig. 6] Fig. 6 is a flowchart illustrating a mode determination process.

[Fig. 7] Fig. 7 is a flowchart illustrating an adjustment process.

[Fig. 8] Fig. 8 is a flowchart illustrating an adjustment process according to a modification.

[Fig. 9] Fig. 9 is a diagram illustrating an example of a voltage adjustment system according to a second embodiment.

[Fig. 10] Fig. 10 is a diagram illustrating a hardware configuration of a control server.

[Fig. 11] Fig. 11 is a diagram illustrating a functional configuration of the control server.

[Fig. 12] Fig. 12 is a flowchart illustrating an air conditioning control process.

[Fig. 13] Fig. 13 is a flowchart illustrating a mode control process.

[Fig. 14] Fig. 14 is a diagram illustrating an example of a method by which the supply amount determination unit determines a reactive power index for a target device.

[Fig. 15] Fig. 15 is a diagram illustrating another example of the method by which the supply amount determination unit determines a reactive power index for a target device.

Description of Embodiments

(First Embodiment)

A first embodiment will be described hereinafter with reference to the accompanying drawings.

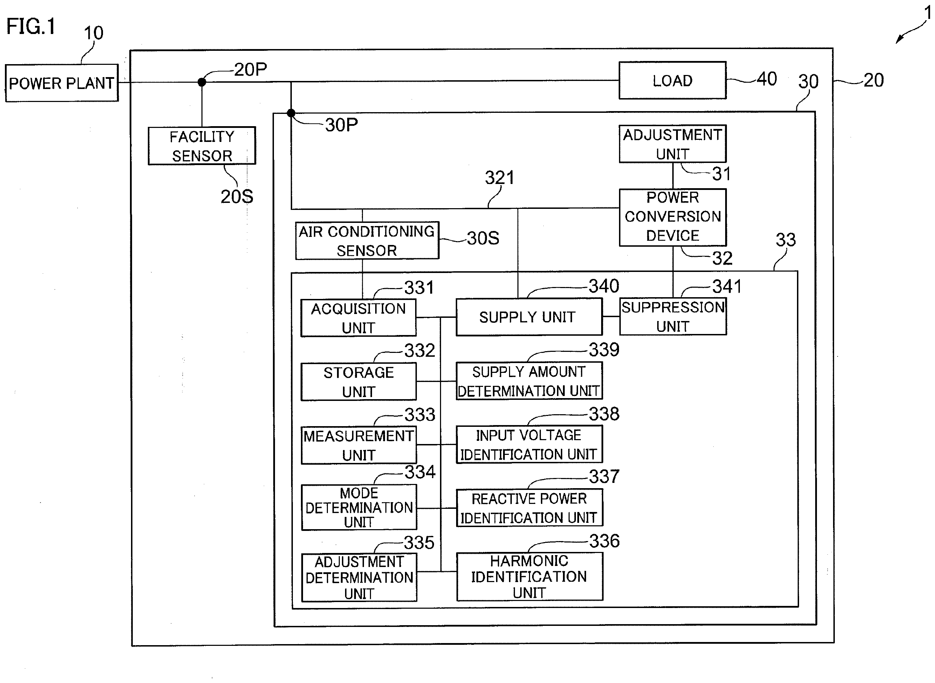

Fig. 1 is a diagram illustrating an example of a voltage adjustment system 1 according to the present embodiment.

The voltage adjustment system 1 is a system for adjusting a voltage. The voltage adjustment system 1 includes a power plant 10 and a power consuming facility 20.

The power plant 10 is a facility for generating power.

The power consuming facility 20 is a facility that receives and consumes the power generated by the power plant 10. The power consuming facility 20 includes a facility sensor 20S, an air conditioner 30, and a load 40. The air conditioner 30 and the load 40 receive power through the power consuming facility 20 and consume the power.

The facility sensor 20S is a sensor for detecting reactive power at a power receiving point 20P of the power consuming facility 20. The power receiving point 20P of the power consuming facility 20 is a place where the power consuming facility 20 receives power. The power receiving point 20P of the power consuming facility 20 is, for example, an electrical switchboard (not illustrated) provided in the power consuming facility 20.

The facility sensor 20S detects the reactive power at intervals of a predetermined time. The predetermined time may be any time and is, for example, one hour. In response to detecting the reactive power, the facility sensor 20S transmits information indicating the detected reactive power to the air conditioner 30. The information indicating the reactive power detected by the facility sensor 20S may be hereinafter referred to as facility-sensor information.

The air conditioner 30 is a device that adjusts the temperature or the humidity while consuming the received power to perform air conditioning.

Further, the air conditioner 30 according to the present embodiment adjusts the voltage input to the air conditioner 30. More specifically, the air conditioner 30 supplies fundamental reactive power to a power receiving point 30P of the air conditioner 30 in accordance with the magnitude of the voltage input to the air conditioner 30 to adjust the voltage input to the air conditioner 30. The power receiving point 30P of the air conditioner 30 is a place where the air conditioner 30 receives power. The voltage input to the air conditioner 30 may be hereinafter referred to as an input voltage.

The input voltage is a voltage at the power receiving point 30P of the air conditioner 30. Accordingly, the power receiving point 30P of the air conditioner 30 is also regarded as a power receiving point of the input voltage.

The air conditioner 30 includes an air conditioning sensor 30S, an adjustment unit 31, a power conversion device 32, and an active filter (AF) 33.

The air conditioning sensor 30S as an example of a detection section is a sensor that detects a voltage and a current in the air conditioner 30. The air conditioning sensor 30S detects the voltage and the current at intervals of a predetermined time. The predetermined time may be any time and is, for example, one hour. In response to detecting the voltage and the current, the air conditioning sensor 30S transmits information indicating the detected voltage and current to the AF 33. The information indicating the voltage and current detected by the air conditioning sensor 30S may be hereinafter referred to as air conditioning sensor information.

The adjustment unit 31 operates by consuming active power to adjust the temperature or the humidity. The adjustment unit 31 includes a motor (not illustrated) that operates by consuming the active power. For example, the adjustment unit 31 is a compressor.

The power conversion device 32 as an example of a conversion unit includes an inverter (not illustrated) and a converter (not illustrated). The power conversion device 32 converts the power received through a power receiving path 321 into power having a specific voltage and a specific frequency by using the inverter and the converter. The power receiving path 321 is a path through which the power received by the power conversion device 32 passes in the air conditioner 30. The specific voltage and the specific frequency are a voltage and a frequency required for the operation of the motor included in the adjustment unit 31. The power conversion device 32 supplies the converted power to the adjustment unit 31.

The power receiving point 30P of the air conditioner 30 described above is, for example, at the tip of the power receiving path 321. The voltage and current to be detected by the air conditioning sensor 30S described above are the voltage and current in the power receiving path 321, and are the voltage and current of the power obtained through conversion by the power conversion device 32. However, the voltage and current to be detected by the air conditioning sensor 30S may be the voltage and current of the power that has not been converted by the power conversion device 32.

The AF 33 is electrically connected to the power receiving path 321 in parallel to the power conversion device 32. The AF 33 supplies a current to the power receiving path 321 to suppress the flow of harmonic current from the air conditioner 30. Note that the power conversion of the power conversion device 32 may produce a harmonic current. In this case, the AF 33 supplies a current to the power receiving path 321 to reduce the harmonic current in the power receiving path 321, thereby suppressing the flow of harmonic current from the air conditioner 30. Further, the AF 33 supplies a current to the power receiving point 20P of the power consuming facility 20 to adjust the power factor at the power receiving point 20P of the power consuming facility 20.

An example of a method by which the AF 33 suppresses harmonic current will be described. If harmonic current is produced in the power receiving path 321 of the power consuming facility 20, the AF 33 supplies a current opposite in phase to the harmonic current in the power receiving path 321 to the power receiving path 321, thereby reducing the harmonic current in the power receiving path 321. As a result, the flow of harmonic current from the air conditioner 30 is suppressed. The harmonic current to be suppressed by the AF 33 may be the harmonic current of any order.

An example of a method by which the AF 33 adjusts the power factor at the power receiving point 20P of the power consuming facility 20 will be described. If reactive power is produced at the power receiving point 20P of the power consuming facility 20, the AF 33 supplies the current of reactive power opposite in phase to the reactive power at the power receiving point 20P to the power receiving point 20P, thereby decreasing the reactive power at the power receiving point 20P. As the reactive power at the power receiving point 20P decreases, the power factor at the power receiving point 20P increases.

The AF 33 according to the present embodiment supplies the fundamental reactive power to the power receiving point 30P of the air conditioner 30 to adjust the voltage input to the air conditioner 30. More specifically, the AF 33 adjusts the voltage input to the air conditioner 30 by supplying the current of the fundamental reactive power to the power receiving point 30P of the air conditioner 30 in accordance with the magnitude of the input voltage.

An example of a method by which the AF 33 adjusts the voltage input to the air conditioner 30 will be described. When the AF 33 supplies leading reactive power to the power receiving point 30P of the air conditioner 30, the voltage of the power receiving point 30P increases. When the AF 33 supplies lagging reactive power to the power receiving point 30P of the air conditioner 30, the voltage of the power receiving point 30P drops. In this way, the AF 33 supplies the leading reactive power or the lagging reactive power to the power receiving point 30P of the air conditioner 30 to adjust the voltage at the power receiving point 30P. With the adjustment of the voltage at the power receiving point 30P of the air conditioner 30, the voltage input to the air conditioner 30 is also adjusted. The leading reactive power is reactive power in which the phase of the current leads the phase of the voltage. The lagging reactive power is reactive power in which the phase of the current lags behind the phase of the voltage.

The AF 33 includes an acquisition unit 331, a storage unit 332, a measurement unit 333, a mode determination unit 334, an adjustment determination unit 335, a harmonic identification unit 336, a reactive power identification unit 337, and an input voltage identification unit 338. The AF 33 further includes a supply amount determination unit 339, a supply unit 340, and a suppression unit 341. The acquisition unit 331, the mode determination unit 334, the adjustment determination unit 335, the harmonic identification unit 336, the reactive power identification unit 337, the input voltage identification unit 338, the supply amount determination unit 339, the supply unit 340, and the suppression unit 341 are implemented by, for example, a microcomputer. The storage unit 332 is implemented by, for example, a storage device such as a ROM (Read Only Memory) or a RAM (Random Access Memory). The measurement unit 333 is implemented by, for example, a real-time clock (RTC).

The acquisition unit 331 as an example of a voltage information acquisition section acquires information transmitted to the air conditioner 30. Examples of the information transmitted to the air conditioner 30 include facility-sensor information and air conditioning sensor information.

The acquisition unit 331 further acquires information related to the position of the air conditioner 30. The information related to the position of the air conditioner 30 may be hereinafter referred to as position information. Accordingly, the acquisition unit 331 is also regarded as a position information acquisition section that acquires position information. Examples of the position information include information indicating a relationship between the position of an adjustment section (not illustrated) and the position of the air conditioner 30. The adjustment section is connected to an electrical path through which the power supplied from the power plant 10 passes, and adjusts a voltage. More specifically, examples of the position information include information indicating a relationship between the position on the electrical path at which the adjustment section is connected and the position on the electrical path at which the air conditioner 30 is connected. Examples of the adjustment section include a substation, a transformer, an automatic voltage regulator (SVR: Step Voltage Regulator), and a reactive power compensation device (SVC: Static Var Compensator). The adjustment section may be any device different from the devices described above if the adjustment section is a section that adjusts a voltage. An energy system that generates renewable energy, such as a solar power generation system or a wind power generation system, may be connected to the electrical path through which the power supplied from the power plant 10 passes. In this case, information indicating a relationship between the position on the electrical path at which the energy system is connected and the position on the electrical path at which the air conditioner 30 is connected may be the position information. In the present embodiment, a user of the voltage adjustment system 1 may create the position information and transmit the created position information to the air conditioner 30 by using a computer (not illustrated). However, the position information may be created by any method, and may be acquired by the acquisition unit 331 by any method.

The acquisition unit 331 stores the acquired information in the storage unit 332.

The storage unit 332 stores information. The information stored in the storage unit 332 will be described in detail below.

The measurement unit 333 measures time. Each time the supply unit 340 operates, the measurement unit 333 measures the operating time of the supply unit 340, and stores the measured time in the storage unit 332. If the previous operating time of the supply unit 340 has already been stored in the storage unit 332, the measurement unit 333 adds the new operating time of the supply unit 340 to the time stored in the storage unit 332. As a result, the cumulative operating time of the supply unit 340 is stored in the storage unit 332.

The measurement unit 333 indicates a time of day.

The mode determination unit 334 determines a mode for controlling the operation of the AF 33. The mode determination unit 334 according to the present embodiment has an internal mode. The internal mode is a mode in which the AF 33 supplies the fundamental reactive power to the power receiving point 30P of the air conditioner 30 on the basis of information on a sensor provided inside the power consuming facility 20. Examples of the sensor provided inside the power consuming facility 20 include the facility sensor 20S and the air conditioning sensor 30S. In the internal mode, the AF 33 according to the present embodiment supplies the current of the fundamental reactive power to the power receiving point 30P of the air conditioner 30.

In the present embodiment, examples of the mode for controlling the operation of the AF 33 include a voltage adjustment mode and a non-voltage adjustment mode. The voltage adjustment mode is a mode for causing the AF 33 to adjust the voltage input to the air conditioner 30. The non-voltage adjustment mode is a mode for causing the AF 33 not to adjust the voltage input to the air conditioner 30. The operation of the AF 33 is controlled in accordance with which of the voltage adjustment mode and the non-voltage adjustment mode is indicated by the mode determination unit 334.

In the present embodiment, the AF 33 suppresses harmonic current regardless of which of the voltage adjustment mode and the non-voltage adjustment mode is indicated by the mode determination unit 334. When the mode determination unit 334 indicates the voltage adjustment mode, the AF 33 does not adjust the power factor at the power receiving point 20P of the power consuming facility 20. On the other hand, when the mode determination unit 334 indicates the non-voltage adjustment mode, the AF 33 adjusts the power factor at the power receiving point 20P of the power consuming facility 20.

The mode determination unit 334 switches to the voltage adjustment mode or the non-voltage adjustment mode in accordance with a predetermined condition.

The adjustment determination unit 335 determines whether to cause the AF 33 to adjust the voltage input to the air conditioner 30. The adjustment determination unit 335 determines whether to cause the AF 33 to adjust the voltage input to the air conditioner 30 in accordance with whether the mode determination unit 334 indicates the voltage adjustment mode or the non-voltage adjustment mode. Further, the adjustment determination unit 335 determines whether to cause the AF 33 to adjust the voltage input to the air conditioner 30, in accordance with the magnitude of the input voltage.

The harmonic identification unit 336 identifies the harmonic current in the power receiving path 321. More specifically, the harmonic identification unit 336 identifies the harmonic current in the power receiving path 321 from the air conditioning sensor information stored in the storage unit 332. Further, the harmonic identification unit 336 calculates a current required to be supplied from the AF 33 to reduce the identified harmonic current. The current required to be supplied from the AF 33 to reduce the harmonic current in the power receiving path 321 may be hereinafter referred to as a reduction-required current. Each time the air conditioning sensor information is newly stored in the storage unit 332, the harmonic identification unit 336 identifies the harmonic current in the power receiving path 321 and calculates the reduction-required current. Further, each time the harmonic identification unit 336 calculates the reduction-required current, the harmonic identification unit 336 stores the value of the calculated reduction-required current in the storage unit 332.

The reactive power identification unit 337 identifies the reactive power at the power receiving point 20P of the power consuming facility 20. More specifically, the reactive power identification unit 337 identifies the reactive power at the power receiving point 20P of the power consuming facility 20 from the facility-sensor information stored in the storage unit 332. Further, the reactive power identification unit 337 calculates a current required to be supplied from the AF 33 to decrease the identified reactive power. The current required to be supplied from the AF 33 to decrease the reactive power at the power receiving point 20P of the power consuming facility 20 may be hereinafter referred to as a decrease-required current. Each time the facility-sensor information is newly stored in the storage unit 332, the reactive power identification unit 337 identifies the reactive power at the power receiving point 20P of the power consuming facility 20 and calculates the decrease-required current. Further, each time the reactive power identification unit 337 calculates the decrease-required current, the reactive power identification unit 337 stores the value of the calculated decrease-required current in the storage unit 332.

The input voltage identification unit 338 identifies the input voltage from the air conditioning sensor information stored in the storage unit 332. More specifically, the input voltage identification unit 338 identifies the input voltage by calculating the voltage before conversion by the power conversion device 32 from the voltage of the power receiving path 321 indicated in the air conditioning sensor information. Further, the input voltage identification unit 338 calculates, from the identified input voltage, the fundamental reactive power required to be supplied from the AF 33 to adjust the voltage input to the air conditioner 30. The fundamental reactive power required to be supplied from the AF 33 to adjust the voltage input to the air conditioner 30 may be hereinafter referred to as adjustment-required power. Each time the air conditioning sensor information is newly stored in the storage unit 332, the input voltage identification unit 338 identifies the input voltage and calculates the adjustment-required power.

The air conditioning sensor information is also regarded as voltage information related to the input voltage. The air conditioning sensor 30S is also regarded as a voltage information acquisition section that acquires voltage information.

The supply amount determination unit 339 determines a supply amount by which the AF 33 supplies a current or fundamental reactive power.

The supply amount determination unit 339 determines the reduction-required current calculated by the harmonic identification unit 336, as the current to be supplied by the AF 33 to reduce the harmonic current in the power receiving path 321. Further, the supply amount determination unit 339 calculates a value by subtracting the reduction-required current from a current capacity that can be supplied by the AF 33. The current capacity that can be supplied by the AF 33 is the maximum current that can be supplied by the AF 33. The value obtained by subtracting the reduction-required current from the current capacity that can be supplied by the AF 33 may be hereinafter referred to as a subtraction value.

When causing the AF 33 to adjust the power factor at the power receiving point 20P of the power consuming facility 20, the supply amount determination unit 339 determines the current to be supplied by the AF 33 in accordance with whether the subtraction value is larger than the decrease-required current. More specifically, when the subtraction value is larger than the decrease-required current, the supply amount determination unit 339 determines that the current to be supplied by the AF 33 to adjust the power factor at the power receiving point 20P is the decrease-required current. When the subtraction value is smaller than the decrease-required current, the supply amount determination unit 339 determines that the current to be supplied by the AF 33 to adjust the power factor at the power receiving point 20P is the subtraction value.

When causing the AF 33 to adjust the voltage input to the air conditioner 30, the supply amount determination unit 339 determines a reactive power index in accordance with whether the subtraction value is larger than the current of the adjustment-required power. The reactive power index is an index related to fundamental reactive power to be supplied by the AF 33. An example of the reactive power index is a fundamental reactive power to be supplied by the AF 33. Another example of the reactive power index is a reactive current to be supplied by the AF 33.

When the subtraction value is larger than the current of the adjustment-required power, the supply amount determination unit 339 determines the reactive power index with reference to the adjustment-required power or the reactive current of the adjustment-required power. When the subtraction value is smaller than the current of the adjustment-required power, the supply amount determination unit 339 determines the reactive power index with reference to the subtraction value or the fundamental reactive power converted from the subtraction value. The index with reference to which the supply amount determination unit 339 determines the reactive power index may be hereinafter referred to as a reference index. The reference index is an index related to the fundamental reactive power. Examples of the reference index include a fundamental reactive power and a reactive current. A method by which the supply amount determination unit 339 determines the reactive power index will be described in detail below.

The AF 33 may fail to supply a current for reducing the harmonic current to adjust the power factor at the power receiving point 20P of the power consuming facility 20. In this case, the supply amount determination unit 339 determines the current to be supplied by the AF 33 to adjust the power factor at the power receiving point 20P in accordance with whether the current capacity that can be supplied by the AF 33 is larger than the decrease-required current.

The AF 33 may fail to supply a current for reducing the harmonic current to adjust the voltage input to the air conditioner 30. In this case, the supply amount determination unit 339 determines the reactive power index in accordance with whether the current capacity that can be supplied by the AF 33 is larger than the current of the adjustment-required power.

Further, the supply of a current to the power receiving path 321 by the AF 33 to reduce the harmonic current may result in an exhaustion of the current capacity that can be supplied by the AF 33. In this case, the supply amount determination unit 339 does not cause the AF 33 to supply fundamental reactive power or current to adjust the voltage input to the air conditioner 30 or adjust the power factor at the power receiving point 20P of the power consuming facility 20, regardless of the mode of the mode determination unit 334 or the magnitude of the input voltage.

The supply unit 340 as an example of a supply section supplies a current. More specifically, the supply unit 340 supplies a current having the magnitude determined by the supply amount determination unit 339.

When instructed by the supply amount determination unit 339 to reduce the harmonic current in the power receiving path 321, the supply unit 340 supplies a current to the power receiving path 321. When instructed by the supply amount determination unit 339 to adjust the power factor at the power receiving point 20P of the power consuming facility 20, the supply unit 340 supplies a current to the power receiving point 20P of the power consuming facility 20. When instructed by the supply amount determination unit 339 to adjust the voltage input to the air conditioner 30, the supply unit 340 supplies the current of the fundamental reactive power to the power receiving point 30P of the air conditioner 30.

When supplying the fundamental reactive power to the power receiving point 30P of the air conditioner 30, the supply unit 340 may gradually increase, with time, the fundamental reactive power to be supplied and finally supply fundamental reactive power having the magnitude determined by the supply amount determination unit 339. In other words, the supply unit 340 may supply fundamental reactive power having a magnitude equal to first power at a specific time after starting the supply of the fundamental reactive power, and supply fundamental reactive power having a magnitude equal to second power larger than the first power at a time later than the specific time.

In this case, compared to a configuration in which the supply unit 340 supplies fundamental reactive power having the magnitude determined by the supply amount determination unit 339 when starting the supply of the fundamental reactive power, it is unlikely that the supply of fundamental reactive power having the determined magnitude to the power receiving point 30P of the air conditioner 30 at a time can induce unintentional voltage fluctuations at the power receiving point 30P.

The suppression unit 341 suppresses consumption of the active power by the air conditioner 30. More specifically, the suppression unit 341 instructs the power conversion device 32 to decrease the power to be supplied to the adjustment unit 31 by the power conversion device 32 in accordance with a predetermined condition. In response to receiving the instruction from the suppression unit 341, the power conversion device 32 decreases the power to be supplied to the adjustment unit 31. As a result, the consumption of the active power by the adjustment unit 31 is suppressed.

The mode determination unit 334, the adjustment determination unit 335, the supply amount determination unit 339, and the suppression unit 341 are also regarded as a control section that controls the air conditioner 30.

In the present embodiment, the facility sensor 20S and the air conditioner 30 are connected to each other via a network (not illustrated). The network connecting the facility sensor 20S and the air conditioner 30 may be any network via which data can be transmitted and received. A communication line used for data transmission and reception may be wired or wireless. A connection to a communication destination via a plurality of networks or communication lines may be used.

In Fig. 1, as a non-limiting example, the power consuming facility 20 includes one air conditioner 30 and one load 40. The power consuming facility 20 may include two or more air conditioners 30. Further, the power consuming facility 20 may include two or more loads 40.

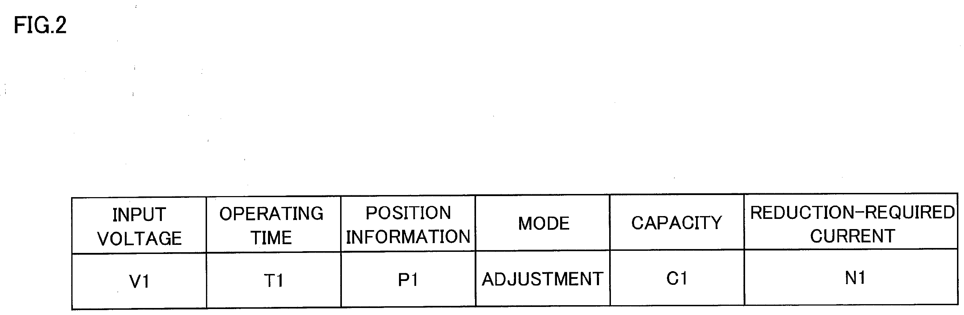

Fig. 2 is a diagram illustrating an air conditioning management table. The air conditioning management table is a table for managing the air conditioner 30. The air conditioning management table is stored in the storage unit 332.

The air conditioning management table includes "input voltage" indicating an input voltage. The "input voltage" is the latest input voltage identified by the input voltage identification unit 338. Each time the latest input voltage is identified by the input voltage identification unit 338, the "input voltage" of the air conditioning management table is overwritten with the identified latest input voltage.

The air conditioning management table further includes "operating time" indicating a cumulative operating time of the supply unit 340. The "operating time" is a time measured by the measurement unit 333 as the cumulative operating time of the supply unit 340. Each time the supply unit 340 newly operates, the new operating time is measured by the measurement unit 333, and the measured time is added to the "operating time" of the air conditioning management table. The time to be measured by the measurement unit 333 as the operating time of the supply unit 340 is a period of time in which the supply unit 340 performs an operation of supplying a current.

The air conditioning management table further includes "position information" indicating the position information acquired by the acquisition unit 331.

The air conditioning management table further includes "mode" indicating the mode of the mode determination unit 334. The "mode" is the latest mode determined by the mode determination unit 334. The "mode" indicates "adjustment", which means that the mode determination unit 334 indicates the voltage adjustment mode. The "mode" indicates "non-adjustment", which means that the mode determination unit 334 indicates the non-voltage adjustment mode. Each time the latest mode is determined by the mode determination unit 334, the "mode" of the air conditioning management table is overwritten with the determined latest mode.

The air conditioning management table further includes "capacity" indicating the current capacity that can be supplied by the AF 33. In the present embodiment, the user of the voltage adjustment system 1 transmits information indicating the current capacity that can be supplied by the AF 33 to the air conditioner 30 by using the computer (not illustrated). As a result, the information transmitted from the computer is stored in the "capacity" of the air conditioning management table. The information indicated in the "capacity" is used by the supply amount determination unit 339 to identify the subtraction value.

The air conditioning management table further includes "reduction-required current" indicating the reduction-required current. The "reduction-required current" is the latest reduction-required current identified by the harmonic identification unit 336. Each time the latest reduction-required current is identified by the harmonic identification unit 336, the "reduction-required current" of the air conditioning management table is overwritten with the identified latest reduction-required current.

In the illustrated example, the air conditioning management table shows "V1" in the "input voltage", "T1" in the "operating time", "P1" in the "position information", "adjustment" in the "mode", "C1" in the "capacity", and "N1" in the "reduction-required current".

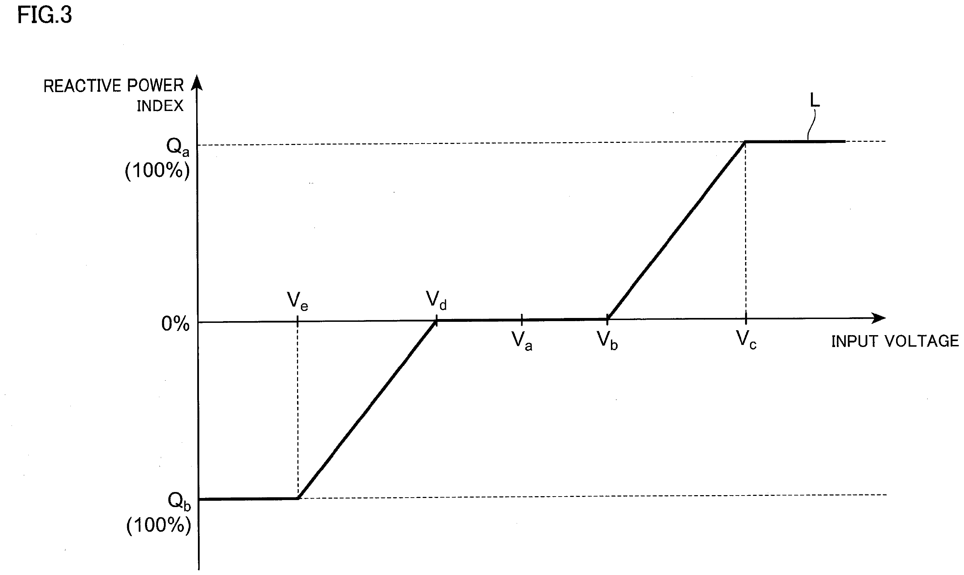

Fig. 3 is a diagram illustrating a relationship between the input voltage and a value determined by the supply amount determination unit 339 as the reactive power index. In Fig. 3, the vertical axis represents the reactive power index, and the horizontal axis represents the input voltage. Fig. 3 presents a Volt-Var curve L. The Volt-Var curve L is a line that defines a relationship between the input voltage and a value determined by the supply amount determination unit 339 as the reactive power index.

The Volt-Var curve L also defines a lagging reference index Qa and a leading reference index Qb as reactive power indices. The lagging reference index Qa is a reference index as a lagging reactive power or a reactive current of the lagging reactive power. The leading reference index Qb is a reference index as a leading reactive power or a reactive current of the leading reactive power.

The Volt-Var curve L also defines, as values of the input voltage, a rated value Va, an unnecessary upper limit value Vb, a maximum lagging value Vc, an unnecessary lower limit value Vd, and a maximum leading value Ve.

The rated value Va is a rated value of the input voltage. In the present embodiment, the rated value Va is determined by the user of the voltage adjustment system 1. The rated value Va may be any value and is, for example, 202 V

The unnecessary upper limit value Vb is an upper limit value of the input voltage above which the supply amount determination unit 339 determines that it is unnecessary to supply fundamental reactive power from the supply unit 340. The unnecessary upper limit value Vb may be any value and is, for example, a value higher than the rated value Va by 5%.

The maximum lagging value Vc is an input voltage at which the supply amount determination unit 339 determines to cause the supply unit 340 to supply the maximum fundamental reactive power that the supply unit 340 can supply as the lagging reactive power. The maximum lagging value Vc may be any value and is, for example, a value higher than the rated value Va by 10%.

The unnecessary lower limit value Vd is a lower limit value of the input voltage below which the supply amount determination unit 339 determines that it is unnecessary to supply fundamental reactive power from the supply unit 340. The unnecessary lower limit value Vd may be any value and is, for example, a value lower than the rated value Va by 5%. The percentage to the rated value Va may be different between the unnecessary upper limit value Vb and the unnecessary lower limit value Vd.

The maximum leading value Ve is an input voltage at which the supply amount determination unit 339 determines to cause the supply unit 340 to supply the maximum fundamental reactive power that the supply unit 340 can supply as the leading reactive power. The maximum leading value Ve may be any value and is, for example, a value lower than the rated value Va by 10%. The percentage to the rated value Va may be different between the maximum lagging value Vc and the maximum leading value Ve.

The supply amount determination unit 339 according to the present embodiment determines the reactive power index to a value corresponding to the coordinate of the input voltage on the Volt-Var curve L.

The reactive power index corresponding to the coordinate of an input voltage equal to or greater than the unnecessary lower limit value Vd and equal to or less than the unnecessary upper limit value Vb on the Volt-Var curve L indicates 0%. This means that when the input voltage is equal to or greater than the unnecessary lower limit value Vd and equal to or less than the unnecessary upper limit value Vb, the supply amount determination unit 339 does not cause the supply unit 340 to supply fundamental reactive power to adjust the voltage input to the air conditioner 30. On the other hand, when the input voltage is less than the unnecessary lower limit value Vd or when the input voltage is greater than the unnecessary upper limit value Vb, the supply amount determination unit 339 causes the supply unit 340 to supply fundamental reactive power to adjust the voltage input to the air conditioner 30.

When the input voltage is equal to or greater than the maximum lagging value Vc, the supply amount determination unit 339 determines the lagging reference index Qa as the reactive power index. In other words, when the input voltage is equal to or greater than the maximum lagging value Vc, the supply amount determination unit 339 determines to cause the supply unit 340 to supply the maximum fundamental reactive power that the supply unit 340 can supply as the lagging reactive power.

When the input voltage is greater than the unnecessary upper limit value Vb and less than the maximum lagging value Vc, the supply amount determination unit 339 determines the reactive power index to a percentage greater than 0% and less than 100% with respect to the lagging reference index Qa. In this case, the supply amount determination unit 339 determines the reactive power index such that the percentage to the lagging reference index Qa increases as the input voltage increases.

When the input voltage is equal to or less than the maximum leading value Ve, the supply amount determination unit 339 determines the leading reference index Qb as the reactive power index. In other words, when the input voltage is equal to or less than the maximum leading value Ve, the supply amount determination unit 339 determines to cause the supply unit 340 to supply the maximum fundamental reactive power that the supply unit 340 can supply as the leading reactive power.

When the input voltage is less than the unnecessary lower limit value Vd and greater than the maximum leading value Ve, the supply amount determination unit 339 determines the reactive power index to a percentage greater than 0% and less than 100% with respect to the leading reference index Qb. In this case, the supply amount determination unit 339 determines the reactive power index such that the percentage to the leading reference index Qb increases as the input voltage decreases.

In the present embodiment, when the input voltage is equal to or greater than the unnecessary lower limit value Vd and equal to or less than the unnecessary upper limit value Vb, the mode determination unit 334 may indicate the voltage adjustment mode. In this case, the supply amount determination unit 339 does not cause the supply unit 340 to supply fundamental reactive power to adjust the voltage input to the air conditioner 30.

The mode determination unit 334 may indicate the non-voltage adjustment mode. In this case, even when the input voltage is less than the unnecessary lower limit value Vd or is greater than the unnecessary upper limit value Vb, the supply amount determination unit 339 does not cause the supply unit 340 to supply fundamental reactive power to adjust the voltage input to the air conditioner 30.

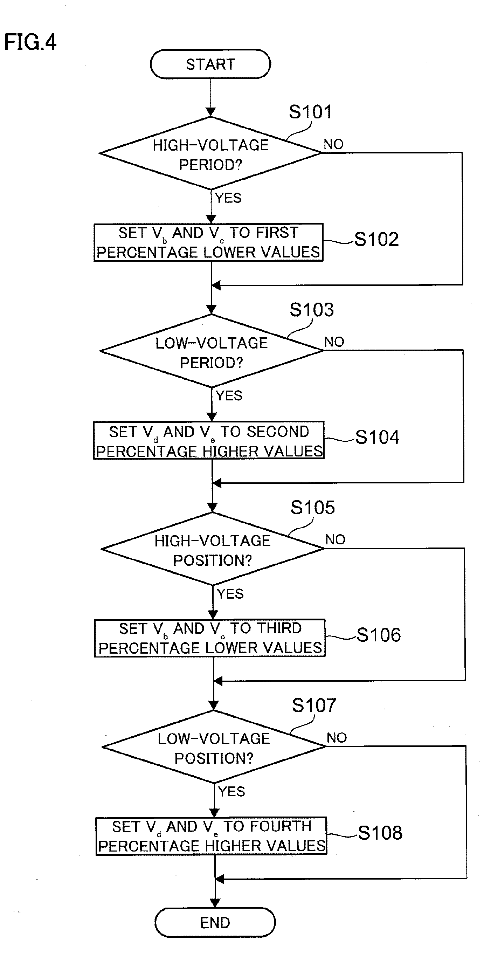

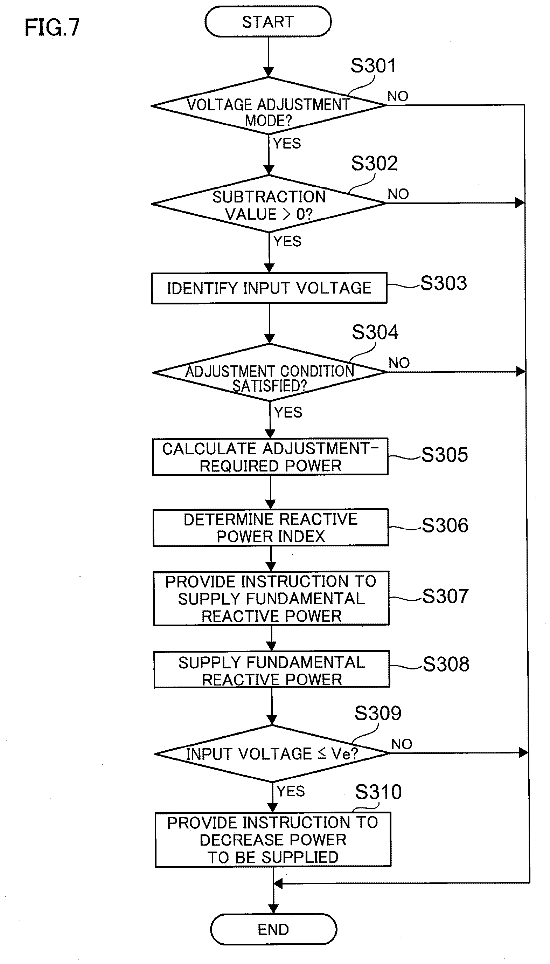

Fig. 4 is a flowchart illustrating a setting process. The setting process is a process in which the supply amount determination unit 339 sets the unnecessary upper limit value Vb, the maximum lagging value Vc, the unnecessary lower limit value Vd, and the maximum leading value Ve. In the present embodiment, in a case where an adjustment process (see Fig. 7) described below is to be performed, the setting process is started before the adjustment process is performed.

The supply amount determination unit 339 determines whether the current point in time is within a high-voltage period (step (hereinafter referred to as "S") 101). The high-voltage period is a period of time determined as a period of time in which a voltage higher than the rated value Va is likely to be input to the air conditioner 30. The high-voltage period is, for example, from 7 p.m. to 7 a.m.

A voltage higher than the rated value Va is more likely to be input to the air conditioner 30 during nighttime than daytime because the air conditioner 30 and the load 40 in the power consuming facility 20 are less likely to be used during nighttime than daytime. In the present embodiment, accordingly, the nighttime is defined as the high-voltage period.

If the current point in time is within the high-voltage period (YES in S101), the supply amount determination unit 339 resets the unnecessary upper limit value Vb and the maximum lagging value Vc to values lower than the set values by a first percentage (S102). The first percentage may be any percentage and is, for example, 2%. On the other hand, if the current point in time is not within the high-voltage period (NO in S 101), the unnecessary upper limit value Vb and the maximum lagging value Vc remain unchanged from the set values.

During a period of time in which a voltage higher than the rated value Va is likely to be input to the air conditioner 30, the unnecessary upper limit value Vb is lower than that during the other periods of time, and thus the input voltage is likely to exceed the unnecessary upper limit value Vb. In this case, the supply unit 340 is likely to supply fundamental reactive power. During a period of time in which a voltage higher than the rated value Va is likely to be input to the air conditioner 30, furthermore, the maximum lagging value Vc is lower than that during the other periods of time, and thus the input voltage is likely to reach the maximum lagging value Vc. In this case, the supply unit 340 is likely to adjust the voltage input to the air conditioner 30.

The supply amount determination unit 339 determines whether the current point in time is within a low-voltage period (S103). The low-voltage period is a period of time determined as a period of time in which a voltage lower than the rated value Va is likely to be input to the air conditioner 30. The low-voltage period is, for example, from 10 a.m. to 4 p.m.

A voltage lower than the rated value Va is more likely to be input to the air conditioner 30 during daytime than nighttime because the air conditioner 30 and the load 40 in the power consuming facility 20 are more likely to be used during daytime than nighttime. In the present embodiment, accordingly, the daytime is defined as the low-voltage period.

If the current point in time is within the low-voltage period (YES in S103), the supply amount determination unit 339 resets the unnecessary lower limit value Vd and the maximum leading value Ve to values higher than the set values by a second percentage (S104). The second percentage may be any percentage and is, for example, 2%. On the other hand, if the current point in time is not within the low-voltage period (NO in S103), the unnecessary lower limit value Vd and the maximum leading value Ve remain unchanged from the set values.

During a period of time in which a voltage lower than the rated value Va is likely to be input to the air conditioner 30, the unnecessary lower limit value Vd is higher than that during the other periods of time, and thus the input voltage is likely to fall below the unnecessary lower limit value Vd. In this case, the supply unit 340 is likely to supply fundamental reactive power. During a period of time in which a voltage lower than the rated value Va is likely to be input to the air conditioner 30, furthermore, the maximum leading value Ve is lower than that during the other periods of time, and thus the input voltage is likely to reach the maximum leading value Ve. In this case, the supply unit 340 is likely to adjust the voltage input to the air conditioner 30.

The supply amount determination unit 339 determines whether the air conditioner 30 is located at a high-voltage position (S105). The high-voltage position is a position of the air conditioner 30 determined as a position at which a voltage higher than the rated value Va is likely to be input to the air conditioner 30. In the present embodiment, the high-voltage position is a position of the air conditioner 30 within a predetermined distance from the energy system. The predetermined distance may be any distance and is, for example, 10 km. The supply amount determination unit 339 determines whether the air conditioner 30 is located at the high-voltage position from the "position information" shown in the air conditioning management table (see Fig. 2).

When the air conditioner 30 is located near the energy system, reversing the flow of the power generated by the energy system may increase the voltage around the energy system, resulting in an increase in the voltage input to the air conditioner 30. In the present embodiment, accordingly, a location around the energy system is defined as the high-voltage position.

If the air conditioner 30 is located at the high-voltage position (YES in S105), the supply amount determination unit 339 resets the unnecessary upper limit value Vb and the maximum lagging value Vc to values lower than the set values by a third percentage (S106). The third percentage may be any percentage and is, for example, 2%. On the other hand, if the air conditioner 30 is not located at the high-voltage position (NO in S 105), the unnecessary upper limit value Vb and the maximum lagging value Vc remain unchanged from the set values.

The supply amount determination unit 339 determines whether the air conditioner 30 is located at a low-voltage position (S107). The low-voltage position is a position of the air conditioner 30 determined as a position at which a voltage lower than the rated value Va is likely to be input to the air conditioner 30. In the present embodiment, the low-voltage position is a position of the air conditioner 30 from which a predetermined number or more of loads 40 are located within a predetermined distance. The predetermined number may be any value and is, for example, 100. The predetermined distance may be any value and is, for example, 100 m. The supply amount determination unit 339 identifies whether the air conditioner 30 is located at the low-voltage position from the "position information" shown in the air conditioning management table.

When a large number of loads 40 are located near the air conditioner 30, the use of these loads 40 is likely to reduce the voltage around the loads 40. As a result, a voltage lower than the rated value Va is likely to be input to the air conditioner 30. In the present embodiment, accordingly, the position of the air conditioner 30 near which a large number of loads 40 are located is defined as the low-voltage position.

If the air conditioner 30 is located at the low-voltage position (YES in S107), the supply amount determination unit 339 resets the unnecessary lower limit value Vd and the maximum leading value Ve to values higher than the set values by a fourth percentage (S108). The fourth percentage may be any percentage and is, for example, 2%. On the other hand, if the air conditioner 30 is not located at the low-voltage position (NO in S 107), the unnecessary lower limit value Vd and the maximum leading value Ve remain unchanged from the set values.

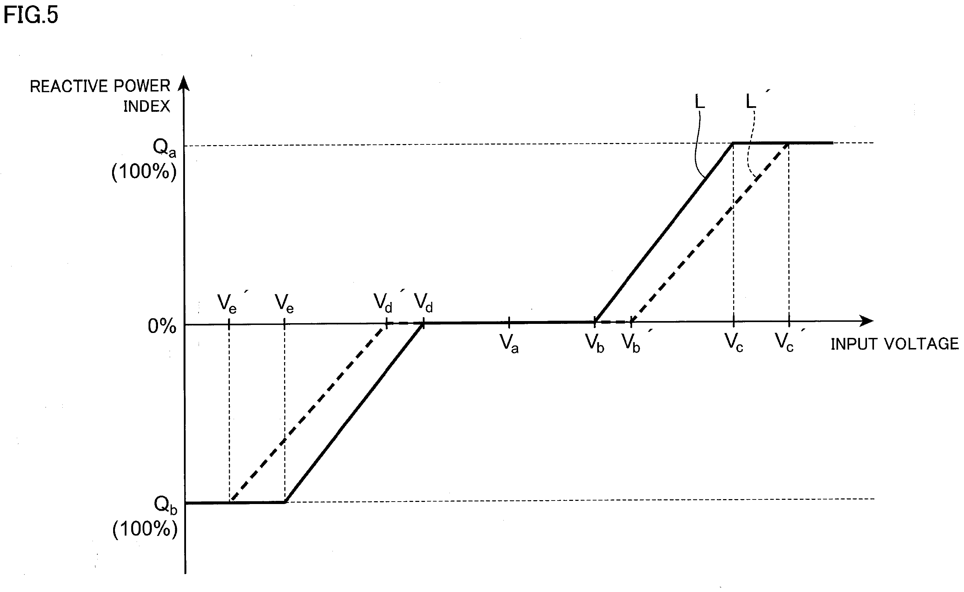

Fig. 5 is a diagram illustrating a relationship between the input voltage and a value determined by the supply amount determination unit 339 as the reactive power index when the setting process (see Fig. 4) is performed.

In the following, it is assumed that in the setting process, the unnecessary upper limit value Vb and the maximum lagging value Vc are set to values lower by the first percentage (see S 102 in Fig. 4) and the unnecessary lower limit value Vd and the maximum leading value Ve are set to values higher by the fourth percentage (see S108 in Fig. 4). In this case, as illustrated in Fig. 5, the relationship between the input voltage and the value determined by the supply amount determination unit 339 as the reactive power index changes from a Volt-Var curve L' obtained before the setting process is performed to a Volt-Var curve L obtained after the setting process is performed.

The Volt-Var curve L' obtained before the setting process is performed defines an unnecessary upper limit value Vb', a maximum lagging value Vc', an unnecessary lower limit value Vd', and a maximum leading value Ve'. The Volt-Var curve L obtained after the setting process is performed defines an unnecessary upper limit value Vb, a maximum lagging value Vc, an unnecessary lower limit value Vd, and a maximum leading value Ve.

The lagging reference index Qa, the leading reference index Qb, and the rated value Va have the same values between the Volt-Var curve L' obtained before the setting process is performed and the Volt-Var curve L obtained after the setting process is performed. However, the lagging reference index Qa or the leading reference index Qb may be changed between the Volt-Var curve L' obtained before the setting process is performed and the Volt-Var curve L obtained after the setting process is performed.

The unnecessary upper limit value Vb and the maximum lagging value Vc after the setting process is performed are lower than the unnecessary upper limit value Vb' and the maximum lagging value Vc' before the setting process is performed. The unnecessary lower limit value Vd and the maximum leading value Ve after the setting process is performed are higher than the unnecessary lower limit value Vd' and the maximum leading value Ve' before the setting process is performed. Further, the Volt-Var curve L obtained after the setting process is performed has a larger slope for a value determined by the supply amount determination unit 339 as the reactive power index with respect to the input voltage than the Volt-Var curve L' obtained before the setting process is performed.

When the input voltage is equal to or greater than the unnecessary upper limit value Vb and less than the maximum lagging value Vc, the supply amount determination unit 339 determines a larger value as the reactive power index after the setting process is performed than before the setting process is performed.

When the input voltage is less than the unnecessary lower limit value Vd and higher than the maximum leading value Ve, the supply amount determination unit 339 determines a larger value as the reactive power index after the setting process is performed than before the setting process is performed.

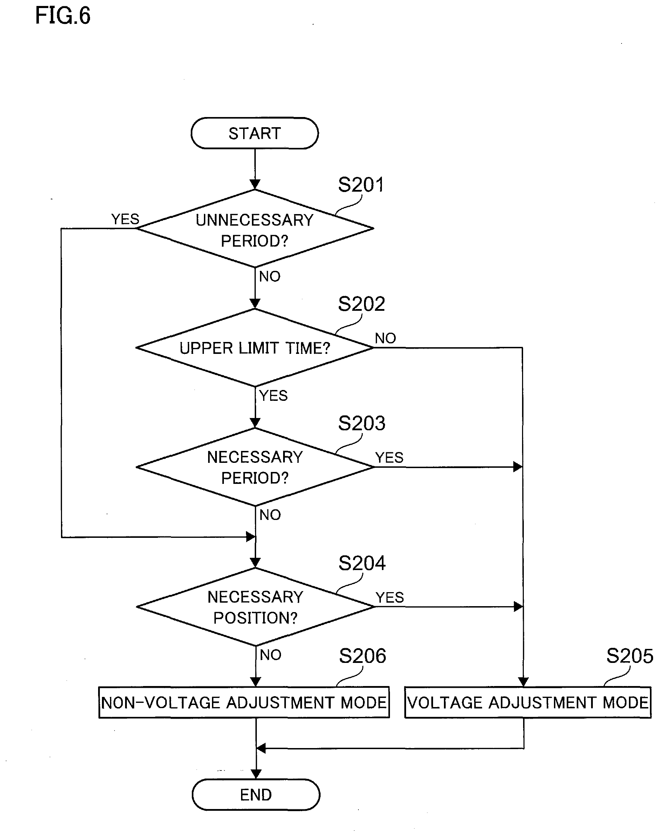

Fig. 6 is a flowchart illustrating a mode determination process. The mode determination process is a process in which the mode determination unit 334 determines the mode of the operation of the AF 33. In the present embodiment, the mode determination process is started at intervals of a predetermined time. The predetermined time may be any time and is, for example, one hour.

The mode determination unit 334 determines whether the current point in time is within an unnecessary period (S201). The unnecessary period is a period of time in which the mode determination unit 334 determines that it is unnecessary for the AF 33 to adjust the voltage input to the air conditioner 30. The unnecessary period is, for example, any period in April to June, October, and November.

The air conditioner 30 is less likely to be used in spring or autumn than in summer or winter. When the air conditioner 30 is less likely to be used, the voltage input to the air conditioner 30 is less likely to fluctuate than when the air conditioner 30 is more likely to be used. Accordingly, the period of time in which the air conditioner 30 is less likely to be used is defined as the period of time in which it is unnecessary for the AF 33 to adjust the voltage input to the air conditioner 30.

If the current point in time is not within the unnecessary period (NO in S201), the mode determination unit 334 determines whether the cumulative operating time of the supply unit 340 has reached an upper limit time (S202). The upper limit time is a threshold above which the mode determination unit 334 determines not to cause the AF 33 to adjust the voltage input to the air conditioner 30, and is a threshold for the operating time of the supply unit 340. The upper limit time is determined for suppression of the occurrence of a failure in the AF 33. The upper limit time may be any time and is, for example, 5000 hours.

When the supply unit 340 has a long cumulative operating time and reaches near the end of life of the supply unit 340, a failure is likely to occur in the AF 33. In other words, when the supply unit 340 is close to a limit at which the operation can be continued even if the supply unit 340 changes with time, a failure is likely to occur in the AF 33. Accordingly, a specific operating time of the supply unit 340 is determined in relation to the life of the supply unit 340 as a threshold above which the mode determination unit 334 determines not to cause the AF 33 to adjust the voltage input to the air conditioner 30.

If the cumulative operating time of the supply unit 340 has reached the upper limit time (YES in S202), the mode determination unit 334 determines whether the current point in time is within a necessary period (S203). The necessary period is a period of time in which the mode determination unit 334 determines that it is necessary for the AF 33 to adjust the voltage input to the air conditioner 30. The necessary period is, for example, from 10 a.m. to 4 p.m. in July to September or from 7 p.m. to 12 p.m. in December to March.

During the daytime in summer, the temperature is likely to be higher than that at night in summer or in the other seasons, and thus the air conditioner 30 is more likely to be used for the purpose of reducing the room temperature. During the nighttime in winter, the temperature is likely to be lower than that in the daytime in winter or in the other seasons, and thus the air conditioner 30 is more likely to be used for the purpose of increasing the room temperature. When the air conditioner 30 is more likely to be used, the voltage input to the air conditioner 30 is more likely to fluctuate than when the air conditioner 30 is less likely to be used. Accordingly, the period of time in which the air conditioner 30 is more likely to be used is defined as the period of time in which it is necessary for the AF 33 to adjust the voltage input to the air conditioner 30.

If the current point in time is not within the necessary period (NO in S203) or if a positive result is obtained in step 201, the mode determination unit 334 determines whether the air conditioner 30 is located at a necessary position (S204). The necessary position is a position of the air conditioner 30 at which the mode determination unit 334 determines that it is necessary for the AF 33 to adjust the voltage input to the air conditioner 30. An example of the necessary position is a position of the air conditioner 30 that is more than a predetermined distance away from the adjustment section. Another example of the necessary position is a position of the air conditioner 30 that is within a predetermined distance from the energy system. The predetermined distance may be any distance and is, for example, 10 km. The mode determination unit 334 determines whether the air conditioner 30 is located at the necessary position from the "position information" shown in the air conditioning management table (see Fig. 2).

When the air conditioner 30 is located near the adjustment section, the voltage around the adjustment section is also adjusted in response to the adjustment section performing voltage adjustment. As a result, the voltage input to the air conditioner 30 is less likely to fluctuate. On the other hand, when the air conditioner 30 is located at a position away from the adjustment section, the voltage adjustment of the adjustment section is less likely to affect the air conditioner 30. Thus, even if the adjustment section performs voltage adjustment, the fluctuation of the voltage input to the air conditioner 30 is unlikely to be suppressed. In this case, it is necessary for the AF 33 to adjust the voltage input to the air conditioner 30.

When the air conditioner 30 is located near the energy system, reversing the flow of the power generated by the energy system may increase the voltage around the energy system, resulting in an increase in the voltage input to the air conditioner 30. In this case, it is also necessary for the AF 33 to adjust the voltage input to the air conditioner 30.

Accordingly, the position of the air conditioner 30 away from the adjustment section and the position of the air conditioner 30 close to the energy system are defined as the position of the air conditioner 30 at which it is necessary for the AF 33 to adjust the voltage input to the air conditioner 30.

If a negative result is obtained in step 202, if a positive result is obtained in step 203, or if a positive result is obtained in step 204, the mode determination unit 334 determines the voltage adjustment mode as the mode of the operation of the AF 33 (S205).

If the air conditioner 30 is not located at the necessary position (NO in S204), the mode determination unit 334 determines the non-voltage adjustment mode as the mode of the operation of the AF 33 (S206).

The mode of the operation of the AF 33 is the internal mode before the start and after the end of the mode determination process. In other words, the AF 33 continues the internal mode regardless of which of the voltage adjustment mode and the non-voltage adjustment mode to determine in the mode determination process.

Fig. 7 is a flowchart illustrating an adjustment process. The adjustment process is a process in which the AF 33 adjusts the voltage input to the air conditioner 30. In the present embodiment, the adjustment process is started in response to the air conditioning sensor information being newly acquired by the acquisition unit 331 when the AF 33 is in the internal mode.

The adjustment determination unit 335 determines whether the mode determination unit 334 indicates the voltage adjustment mode (S301). The adjustment determination unit 335 refers to the "mode" shown in the air conditioning management table (see Fig. 2) to determine whether the mode determination unit 334 indicates the voltage adjustment mode. If the mode determination unit 334 indicates the non-voltage adjustment mode (NO in S301), the adjustment process ends. In this case, the adjustment determination unit 335 determines not to cause the AF 33 to supply fundamental reactive power to adjust the voltage input to the air conditioner 30.

On the other hand, if the mode determination unit 334 indicates the voltage adjustment mode (YES in S301), the adjustment determination unit 335 determines whether the subtraction value is larger than 0 (S302). In step 302, the adjustment determination unit 335 calculates a subtraction value from the difference between the "capacity" and the "reduction-required current" shown in the air conditioning management table. Further, the adjustment determination unit 335 determines whether the subtraction value calculated by the input voltage identification unit 338 is larger than 0. If the subtraction value is 0 (NO in S302), the adjustment process ends. In this case, the adjustment determination unit 335 determines not to cause the AF 33 to supply fundamental reactive power to adjust the voltage input to the air conditioner 30.

On the other hand, if the subtraction value is larger than 0 (YES in S302), the input voltage identification unit 338 identifies the input voltage (S303).

The adjustment determination unit 335 determines whether the input voltage satisfies an adjustment condition (S304). In the present embodiment, the adjustment condition is that the input voltage is less than the unnecessary lower limit value Vd or is greater than the unnecessary upper limit value Vb. If the input voltage does not satisfy the adjustment condition (NO in S304), the adjustment process ends. In this case, the adjustment determination unit 335 determines not to cause the AF 33 to supply fundamental reactive power to adjust the voltage input to the air conditioner 30.

On the other hand, if the input voltage satisfies the adjustment condition (YES in S304), the adjustment determination unit 335 determines to cause the AF 33 to supply fundamental reactive power to adjust the voltage input to the air conditioner 30. In this case, the input voltage identification unit 338 calculates the adjustment-required power (S305).

The supply amount determination unit 339 determines the reactive power index (S306). In this case, the supply amount determination unit 339 first calculates the reference index. Then, the supply amount determination unit 339 determines the percentage to the reference index as the reactive power index from the relationship between the input voltage and the set Volt-Var curve L (see Figs. 3 and 5).

The supply amount determination unit 339 instructs the supply unit 340 to supply the fundamental reactive power (S307). In this case, the supply amount determination unit 339 transmits the reactive power index to the supply unit 340 as the value of the instruction for the supply of the fundamental reactive power.

The supply unit 340 supplies the fundamental reactive power corresponding to the reactive power index to the power receiving point 30P of the air conditioner 30 (S308).

The suppression unit 341 determines whether the input voltage is equal to or less than the maximum leading value Ve (S309). The suppression unit 341 refers to the "input voltage" of the air conditioning management table to determine whether the input voltage is equal to or less than the maximum leading value Ve. If the input voltage is greater than the maximum leading value Ve (NO in S309), the adjustment process ends.

If the input voltage is equal to or less than the maximum leading value Ve (YES in S309), the suppression unit 341 instructs the power conversion device 32 to decrease the power to be supplied to the adjustment unit 31 by the power conversion device 32 (S310).

When the input voltage is equal to or less than the maximum leading value Ve, the adjustment of the voltage input to the air conditioner 30 may be insufficient only by the supply unit 340 supplying the fundamental reactive power to the power receiving point 30P of the air conditioner 30. In the present embodiment, accordingly, if the input voltage is equal to or less than the maximum leading value Ve, in addition to the supply of the fundamental reactive power by the supply unit 340, the consumption of the active power by the air conditioner 30 is suppressed to suppress the decrease in the voltage input to the air conditioner 30.

Regardless of whether the AF 33 adjusts the voltage input to the air conditioner 30 in the adjustment process, the supply amount determination unit 339 instructs the supply unit 340 to supply the reduction-required current to reduce the harmonic current in the power receiving path 321. In response to receiving the instruction, the supply unit 340 supplies the reduction-required current to the power receiving path 321.

In the present embodiment, furthermore, as described above, the adjustment process is started each time the air conditioning sensor information is newly acquired by the acquisition unit 331. After the supply amount determination unit 339 causes the supply unit 340 to supply the fundamental reactive power corresponding to the input voltage in the adjustment process, in a new adjustment process, the input voltage may also have the same magnitude as the input voltage in the previous adjustment process. In this case, the magnitude of the reactive power index determined by the supply amount determination unit 339 in the new adjustment process is the same as the magnitude determined in the previous adjustment process, and the supply unit 340 continuously supplies constant fundamental reactive power to the power receiving point 30P of the air conditioner 30. Depending on the setting process (see Fig. 4), the relationship between the input voltage and the value determined by the supply amount determination unit 339 as the reactive power index may be different between when the previous adjustment process is performed and when the new adjustment process is performed. In this case, the value determined by the supply amount determination unit 339 as the reactive power index is different between when the previous adjustment process is performed and when the new adjustment process is performed, even if the input voltages have the same value.

The reduction-required current may be larger when the new adjustment process is performed than when the previous adjustment process is performed. In this case, in the new adjustment process, the value determined by the supply amount determination unit 339 as the reactive power index is lower than that in the previous adjustment process by an amount corresponding to the decrease in the subtraction value.

As described above, in the present embodiment, the AF 33 has the internal mode in which the supply unit 340 supplies, in accordance with the magnitude of an input voltage identified from the air conditioning sensor information acquired by the acquisition unit 331, the fundamental reactive power to the power receiving point 30P of the input voltage in the air conditioner 30. The internal mode is regarded as a first supply mode.

In this case, even if the magnitude of the voltage input to the air conditioner 30 fluctuates, the voltage input to the air conditioner 30 is adjusted. Accordingly, it is possible to suppress the input of a voltage deviating from the range of the maximum leading value Ve or more and the maximum lagging value Vc or less to the air conditioner 30, as compared to a configuration in which the air conditioner 30 does not perform an operation according to the magnitude of the input voltage.

Further, in the internal mode, the AF 33 performs first control for causing the supply unit 340 to suppress the harmonic current generated from the air conditioner 30 or second control for performing the first control and causing the supply unit 340 to supply the fundamental reactive power in accordance with the magnitude of the input voltage.

In this case, even when it is necessary to suppress the flow of harmonic current from the air conditioner 30 but it is not necessary to supply the fundamental reactive power to the power receiving point 30P of the air conditioner 30, it is possible to prevent the fundamental reactive power from being supplied to the power receiving point 30P.

In the present embodiment, in particular, in the internal mode, the AF 33 performs the first control when the magnitude of the input voltage does not satisfy the adjustment condition, and performs the second control when the magnitude of the input voltage satisfies the adjustment condition.

In this case, when causing the supply unit 340 to suppress the flow of harmonic current from the air conditioner 30, whether to cause the supply unit 340 to supply the fundamental reactive power to the power receiving point 30P of the air conditioner 30 can be switched in accordance with the magnitude of the input voltage.

Further, the AF 33 has, in the internal mode, a voltage adjustment mode for causing the supply unit 340 to supply the fundamental reactive power in accordance with the magnitude of the input voltage when the magnitude of the input voltage satisfies the adjustment condition, and a non-voltage adjustment mode for causing the supply unit 340 not to supply the fundamental reactive power in accordance with the magnitude of the input voltage even when the magnitude of the input voltage satisfies the adjustment condition.

In this case, it is possible to suppress the use of the supply unit 340 to supply the fundamental reactive power, as compared to a configuration in which the supply unit 340 always supplies the fundamental reactive power in accordance with the magnitude of the input voltage when the magnitude of the input voltage satisfies the adjustment condition.

In the present embodiment, in particular, in the internal mode, the mode determination unit 334 switches to the voltage adjustment mode or the non-voltage adjustment mode in accordance with the period of time.

In this case, it is possible to suppress the use of the supply unit 340 to supply the fundamental reactive power, as compared to a configuration in which the supply unit 340 supplies the fundamental reactive power in accordance with the magnitude of the input voltage regardless of the period of time.

Further, in the internal mode, the mode determination unit 334 switches to the voltage adjustment mode or the non-voltage adjustment mode in accordance with the relationship between the period of time and the operation of the supply unit 340.

In this case, it is possible to suppress the use of the supply unit 340 to supply the fundamental reactive power, as compared to a configuration in which the supply unit 340 supplies the fundamental reactive power in accordance with the magnitude of the input voltage regardless of the relationship between the period of time and the operation of the supply unit 340.

Further, in the internal mode, the mode determination unit 334 switches to the voltage adjustment mode or the non-voltage adjustment mode in accordance with the position information.

In this case, it is possible to suppress the use of the supply unit 340 to supply the fundamental reactive power, as compared to a configuration in which the supply unit 340 supplies the fundamental reactive power in accordance with the magnitude of the input voltage regardless of a position related to the air conditioner 30.

Further, the supply amount determination unit 339 determines the reactive power index in consideration of the current required to be supplied by the supply unit 340 to suppress the flow of harmonic current from the air conditioner 30. In other words, in the internal mode, the supply amount determination unit 339 controls the supply unit 340 to supply the fundamental reactive power in accordance with the suppression of the harmonic current by the supply unit 340.

In this case, it is possible to reduce the influence of the supply of the fundamental reactive power from the supply unit 340 on the suppression of the harmonic current by the supply unit 340, as compared to a configuration in which the supply unit 340 is controlled to supply the fundamental reactive power regardless of the suppression of the harmonic current by the supply unit 340.

In the present embodiment, in particular, the supply amount determination unit 339 determines the reactive power index from a value obtained by subtracting the reduction-required current from the current capacity that can be supplied by the AF 33. In other words, in the internal mode, the supply amount determination unit 339 determines an index related to the fundamental reactive power to be supplied by the supply unit 340 in accordance with the capacity remaining in the supply unit 340 for the supply of the fundamental reactive power in a case of the suppression of the harmonic current by the supply unit 340.

In this case, it is possible to adjust the voltage input to the air conditioner 30 while ensuring the capacity of the supply unit 340 required for suppression of the harmonic current.

In the present embodiment, furthermore, in the setting process (see Fig. 4), the supply amount determination unit 339 sets the relationship between the input voltage and the reactive power index in accordance with the period of time to which the current point in time belongs (see Fig. 5). Then, the supply amount determination unit 339 determines the reactive power index from the set relationship. In other words, in the internal mode, the supply amount determination unit 339 determines an index related to the fundamental reactive power to be supplied by the supply unit 340 in accordance with the period of time related to the supply of the fundamental reactive power from the supply unit 340.

In this case, it is possible to adjust the voltage input to the air conditioner 30 in accordance with the degree of adjustment corresponding to the period of time related to the supply of the fundamental reactive power from the supply unit 340.

Further, in the internal mode, the supply amount determination unit 339 determines an index related to the fundamental reactive power to be supplied by the supply unit 340 in accordance with the position information.

In this case, it is possible to adjust the voltage input to the air conditioner 30 in accordance with the degree of adjustment corresponding to a position related to the air conditioner 30.

Further, in the internal mode, when the input voltage identified from the air conditioning sensor information is equal to or less than the maximum leading value Ve, the suppression unit 341 suppresses the consumption of the active power by the air conditioner 30.

In this case, it is possible to suppress the input of a voltage less than the maximum leading value Ve to the air conditioner 30, as compared to a configuration in which the air conditioner 30 adjusts the voltage input to the air conditioner 30 only by the supply of the fundamental reactive power.

The air conditioning sensor information is information created from the result of detection of the voltage across the air conditioner 30, the detection being performed by the air conditioning sensor 30S.

In this case, it is possible for the air conditioner 30 to implement the supply of the fundamental reactive power corresponding to the magnitude of the input voltage without using a detection section different from the air conditioner 30 to detect the voltage across the air conditioner 30.

The supply section that supplies the fundamental reactive power is the AF 33 that suppresses the harmonic current generated by the operation of the power conversion device 32.

In this case, it is possible to implement the supply of the fundamental reactive power to the power receiving point 30P of the air conditioner 30 even when the adjustment unit 31 and the power conversion device 32 are not in operation.

In the present embodiment, furthermore, the magnitude of the fundamental reactive power to be supplied to the power receiving point 30P from the supply unit 340 in accordance with the input voltage is determined in advance from the relationship between the reference index, the input voltage, and the Volt-Var curve L. In other words, the fundamental reactive power to be supplied by the supply unit 340 is determined in advance in accordance with the magnitude of the input voltage.

In this case, it is possible to prevent the supply unit 340 from approaching the operation limit, as compared to a configuration in which the amount of the fundamental reactive power to be supplied from the supply unit 340 is increased if the voltage input to the air conditioner 30 is not adjusted even when the supply unit 340 supplies the fundamental reactive power.

(Modification of Adjustment Process)

Next, a modification of the adjustment process will be described.

The present embodiment has described the operation of the AF 33 such that the suppression of the flow of harmonic current from the air conditioner 30 is prioritized over the adjustment of the voltage input to the air conditioner 30 regardless of the input voltage, as a non-limiting example.

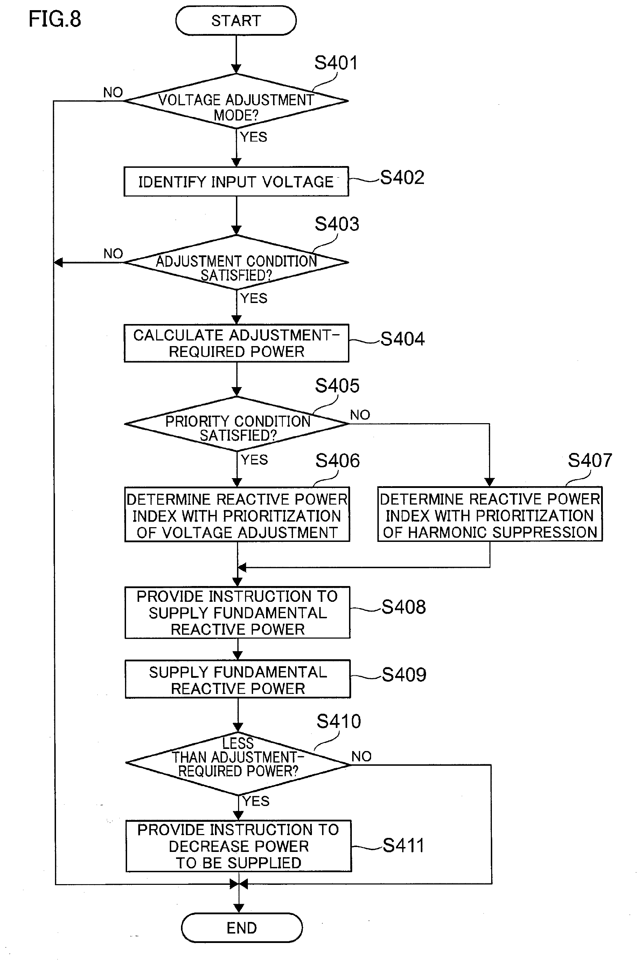

Fig. 8 is a flowchart illustrating an adjustment process according to a modification.

In Fig. 8, step 401, step 402, step 403, and step 404 are the same processes as step 301, step 303, step 304, and step 305 in the adjustment process illustrated in Fig. 7, respectively, and thus the description thereof will be omitted.

The supply amount determination unit 339 determines whether the input voltage satisfies a priority condition (S405). The priority condition is a condition used by the supply amount determination unit 339 to determine which of the suppression of the harmonic current in the air conditioner 30 and the adjustment of the voltage input to the air conditioner 30 to prioritize. In the present embodiment, the priority condition is determined in accordance with which of the suppression of the harmonic current in the air conditioner 30 and the adjustment of the voltage input to the air conditioner 30 the supply amount determination unit 339 determines to prioritize in accordance with the magnitude of the input voltage. In the present embodiment, furthermore, the priority condition is determined to be that the input voltage is equal to or less than the maximum leading value Ve or is equal to or greater than the maximum lagging value Vc.

If the input voltage satisfies the priority condition (YES in S405), the supply amount determination unit 339 determines the reactive power index such that the adjustment of the voltage input to the air conditioner 30 is prioritized over the suppression of the harmonic current in the air conditioner 30 (S406). In this case, the supply amount determination unit 339 may determine the adjustment-required power or the reactive current of the adjustment-required power as the reactive power index. Then, the current to be supplied by the supply unit 340 to suppress the harmonic current in the air conditioner 30 may be determined in accordance with the capacity remaining in the supply unit 340 when the supply unit 340 is caused to supply the adjustment-required power.

If the input voltage does not satisfy the priority condition (NO in S405), the supply amount determination unit 339 determines the reactive power index such that the suppression of the harmonic current in the air conditioner 30 is prioritized over the adjustment of the voltage input to the air conditioner 30 (S407). In this case, the supply amount determination unit 339 may determine the reactive power index by the same method as the adjustment process illustrated in Fig. 7.

When the input voltage is less than the rated value Va, the adjustment-required power increases as the value of the input voltage decreases. When the input voltage is higher than the rated value Va, the adjustment-required power increases as the value of the input voltage increases. In these cases, even when the input voltage is equal to or less than the maximum leading value Ve or is equal to or greater than the maximum lagging value Vc, prioritizing the suppression of the harmonic current in the air conditioner 30 over the adjustment of the voltage input to the air conditioner 30 may make it more likely that the voltage input to the air conditioner 30 is insufficiently adjusted. In the present embodiment, accordingly, when the input voltage is equal to or less than the maximum leading value Ve or is equal to or greater than the maximum lagging value Vc, the adjustment of the voltage input to the air conditioner 30 is prioritized over the suppression of the harmonic current. In this case, even when the adjustment-required power is large, the voltage input to the air conditioner 30 is likely to be adjusted.

The supply amount determination unit 339 instructs the supply unit 340 to supply the fundamental reactive power (S408). In this case, the supply amount determination unit 339 transmits the reactive power index to the supply unit 340 as the value of the instruction for the supply of the fundamental reactive power.

The supply unit 340 supplies the fundamental reactive power corresponding to the reactive power index to the power receiving point 30P of the air conditioner 30 (S409).

The suppression unit 341 determines whether the fundamental reactive power identified from the reactive power index is less than the adjustment-required power (S410). If a negative result is obtained (NO in S410), the adjustment process ends.

On the other hand, if the fundamental reactive power identified from the reactive power index is less than the adjustment-required power (YES in S410), the suppression unit 341 instructs the power conversion device 32 to decrease the power to be supplied to the adjustment unit 31 by the power conversion device 32 (S411).

As described above, in the modification, in the internal mode, the first control is prioritized over the third control when the adjustment condition determined for the magnitude of the input voltage is satisfied and the priority condition determined for the magnitude of the input voltage is not satisfied, and the third control is prioritized over the first control when the priority condition is satisfied. As described above, the first control is control for causing the supply unit 340 to suppress the harmonic current generated from the air conditioner 30. The third control is control for causing the supply unit 340 to supply the fundamental reactive power in accordance with the magnitude of the input voltage.

In this case, which of the control for causing the supply unit 340 to suppress the harmonic current generated from the air conditioner 30 and the control for causing the supply unit 340 to supply the fundamental reactive power in accordance with the magnitude of the input voltage to prioritize can be switched in accordance with the magnitude of the input voltage.

In the present disclosure, it has been described that the supply amount determination unit 339 does not change the unnecessary upper limit value Vb and the maximum lagging value Vc from the set values in the setting process (see Fig. 4) when the current point in time is not within the high-voltage period. However, the present disclosure is not limited thereto.

When the current point in time is not within the high-voltage period, the supply amount determination unit 339 may reset the unnecessary upper limit value Vb and the maximum lagging value Vc to values higher than the set values by the first percentage, and reset the lagging reference index Qa to a value lower than the set value by the first percentage. When the current point in time is not within the low-voltage period, the supply amount determination unit 339 may reset the unnecessary lower limit value Vd, the maximum leading value Ve, and the leading reference index Qb to values lower than the set values by the second percentage. When the air conditioner 30 is not located at the high-voltage position, the supply amount determination unit 339 may reset the unnecessary upper limit value Vb and the maximum lagging value Vc to values higher than the set values by the third percentage, and reset the lagging reference index Qa to a value lower than the set value by the third percentage. When the air conditioner 30 is not located at the low-voltage position, the supply amount determination unit 339 may reset the unnecessary lower limit value Vd, the maximum leading value Ve, and the leading reference index Qb to values lower than the set values by the fourth percentage.

In the present disclosure, furthermore, it has been described that in the setting process, the unnecessary upper limit value Vb, the maximum lagging value Vc, and the lagging reference index Qa are determined in accordance with whether the current point in time is within the high-voltage period. It has also been described that in the setting process, the unnecessary lower limit value Vd, the maximum leading value Ve, and the leading reference index Qb are determined in accordance with whether the current point in time is within the low-voltage period. However, the present disclosure is not limited thereto.

The supply amount determination unit 339 may set the unnecessary upper limit value Vb, the maximum lagging value Vc, and the lagging reference index Qa in accordance with whether the current point in time is a holiday. Further, the supply amount determination unit 339 may set the unnecessary lower limit value Vd, the maximum leading value Ve, and the leading reference index Qb in accordance with whether the current point in time is a weekday.

In the present disclosure, furthermore, it has been described that the fundamental reactive power to be supplied by the supply unit 340 is determined in advance in accordance with the magnitude of the input voltage. However, the present disclosure is not limited thereto.

The supply amount determination unit 339 may determine the reactive power index in accordance with a result of the supply unit 340 supplying the fundamental reactive power to the power receiving point 30P of the air conditioner 30. More specifically, the supply amount determination unit 339 may change the reactive power index such that the voltage input to the air conditioner 30 in response to the fundamental reactive power being supplied from the supply unit 340 approaches the rated value Va.

In the present disclosure, furthermore, the supply amount determination unit 339 determines the reactive power index in accordance with the reference index, the input voltage, and the Volt-Var curve L. However, the present disclosure is not limited thereto.

The supply amount determination unit 339 may determine the reactive power index to be proportional to the magnitude of the difference between the input voltage and the rated value Va.

In the present disclosure, furthermore, it has been described that when the input voltage satisfies the priority condition, the supply amount determination unit 339 prioritizes the adjustment of the voltage input to the air conditioner 30 over the suppression of the harmonic current in the air conditioner 30. However, the present disclosure is not limited thereto.

The supply amount determination unit 339 may determine which of the suppression of the harmonic current in the air conditioner 30 and the adjustment of the voltage input to the air conditioner 30 to prioritize in accordance with the reduction-required current and the input voltage. In one example, when the reduction-required current is equal to or greater than a predetermined value, the supply amount determination unit 339 may prioritize the suppression of the harmonic current in the air conditioner 30 over the adjustment of the voltage input to the air conditioner 30 even if the input voltage satisfies the priority condition. When the reduction-required current is less than the predetermined value and the input voltage satisfies the priority condition, the supply amount determination unit 339 may prioritize the adjustment of the voltage input to the air conditioner 30 over the suppression of the harmonic current in the air conditioner 30.

In the present disclosure, furthermore, it has been described that the supply amount determination unit 339 determines the reactive power index in accordance with the magnitude of the input voltage. However, the present disclosure is not limited thereto.

When the input voltage satisfies the adjustment condition, the supply amount determination unit 339 may cause the supply unit 340 to supply the fundamental reactive power having a predetermined magnitude regardless of the magnitude of the input voltage. In other words, the supply amount determination unit 339 is desirably configured to determine whether to cause the supply unit 340 to supply the fundamental reactive power in accordance with the magnitude of the input voltage, and does not need to determine the reactive power index in accordance with the magnitude of the input voltage.

In the present disclosure, furthermore, it has been described that the input voltage identification unit 338 identifies the input voltage from the air conditioning sensor information. However, the present disclosure is not limited thereto. The input voltage identification unit 338 may calculate the input voltage from the voltage in the power consuming facility 20. In this case, the facility sensor 20S may detect the voltage at the power receiving point 20P of the power consuming facility 20 and transmit facility-sensor information indicating the detected voltage to the air conditioner 30. In this case, the facility-sensor information is regarded as voltage information related to the input voltage. Alternatively, the voltage adjustment system 1 may include a detection section different from the facility sensor 20S. The detection section may detect the voltage at the power receiving point 20P of the power consuming facility 20 and transmit facility-sensor information indicating the detected voltage to the air conditioner 30. The input voltage identification unit 338 may identify the input voltage from the acquired facility-sensor information. Alternatively, the voltage adjustment system 1 may include a detection section that detects a voltage outside the power consuming facility 20. The detection section may detect the voltage outside the power consuming facility 20 and transmit outside-facility information indicating the detected voltage to the air conditioner 30. The input voltage identification unit 338 may identify the input voltage from the acquired outside-facility information. In the cases described above, the information detected by the detection section is regarded as voltage information related to the input voltage.

In the present disclosure, furthermore, it has been described that the voltage information used by the input voltage identification unit 338 to identify the input voltage is the air conditioning sensor information, the facility-sensor information, or the like.

The voltage information may be information indicating a DC voltage in the power receiving path 321 or information indicating an AC voltage in the power receiving path 321. Alternatively, the voltage information may be information indicating a DC voltage across the AF 33 or information indicating an AC voltage across the AF 33. Note that the voltage information may be any information that is information related to the input voltage and information used by the input voltage identification unit 338 to identify the input voltage. Alternatively, the air conditioning sensor 30S may detect an input voltage and create air conditioning sensor information including information indicating the detected input voltage. In other words, the voltage information may be information indicating the input voltage.

In the present disclosure, furthermore, it has been described that the position information is information indicating the position of the air conditioner 30. However, the present disclosure is not limited thereto. The position information may be information indicating the position of the power consuming facility 20 in which the air conditioner 30 is disposed. In other words, the target position indicated in the position information may be the position of the power consuming facility 20 in which the air conditioner 30 is disposed. Note that the position information may be information indicating the position of an object different from the air conditioner 30 as long as the position information is information related to the position of the air conditioner 30.

In the present disclosure, furthermore, it has been described that the acquisition unit 331 acquires both the voltage information and the position information. However, the present disclosure is not limited thereto. The AF 33 may include an acquisition section different from the acquisition unit 331. One of the acquisition unit 331 and the acquisition section different from the acquisition unit 331 may acquire the voltage information, and the other may acquire the position information. In other words, the voltage information acquisition section and the position information acquisition section may be different functional units.

In the present disclosure, furthermore, it has been described that the power consuming facility 20 may include a plurality of air conditioners 30. The plurality of air conditioners 30 disposed in the power consuming facility 20 may each supply the fundamental reactive power to a power receiving point 30P of one air conditioner 30 disposed in the power consuming facility 20 to adjust the voltage input to the one air conditioner 30. In this case, a management server (not illustrated) that manages the plurality of air conditioners 30 may notify each of the plurality of air conditioners 30 of an air conditioner 30 to which the fundamental reactive power is to be supplied.

In this case, the voltages input to the air conditioners 30 are more likely to be adjusted than when only one air conditioner 30 is used to adjust the voltage input to the air conditioner 30. Accordingly, in the adjustment of the voltages input to the air conditioners 30, the air conditioners 30 are desirably configured to supply the fundamental reactive power even if the adjustment of the voltage input to the air conditioner 30 is not achievable depending on the operation of the one air conditioner 30.

In the present disclosure, furthermore, it has been described that the AF 33 supplies the fundamental reactive power to the power receiving point 30P of the air conditioner 30. However, the present disclosure is not limited thereto.

The power conversion device 32 including a PWM converter or a matrix converter may supply the fundamental reactive power to the power receiving point 30P of the air conditioner 30. The PWM converter is a converter that controls a waveform of an input current. The matrix converter is a converter that converts AC power having a specific frequency into AC power having a frequency different from the specific frequency. Note that the power conversion device 32 may has the functions of the acquisition unit 331, the storage unit 332, the measurement unit 333, the mode determination unit 334, the adjustment determination unit 335, the harmonic identification unit 336, the reactive power identification unit 337, the input voltage identification unit 338, the supply amount determination unit 339, the supply unit 340, and the suppression unit 341. The power conversion device 32 may supply the fundamental reactive power to the power receiving point 30P of the air conditioner 30 in accordance with the magnitude of the input voltage. In this case, the power conversion device 32 is also regarded as a supply section that supplies the fundamental reactive power.

(Second Embodiment)

A second embodiment will be described hereinafter.

The second embodiment is the same as the first embodiment in that the air conditioner 30 supplies the fundamental reactive power to the power receiving point 30P of the air conditioner 30. However, the second embodiment is different from the first embodiment in the mode for controlling the AF 33. More specifically, the second embodiment is different from the first embodiment in that the AF 33 has not only the internal mode but also a mode for supplying the fundamental reactive power to the power receiving point 30P of the air conditioner 30 on the basis of information on a sensor disposed outside the power consuming facility 20.

In the following description, components similar to those of the first embodiment are denoted by the same reference numerals. A description of components similar to those of the first embodiment may be omitted.

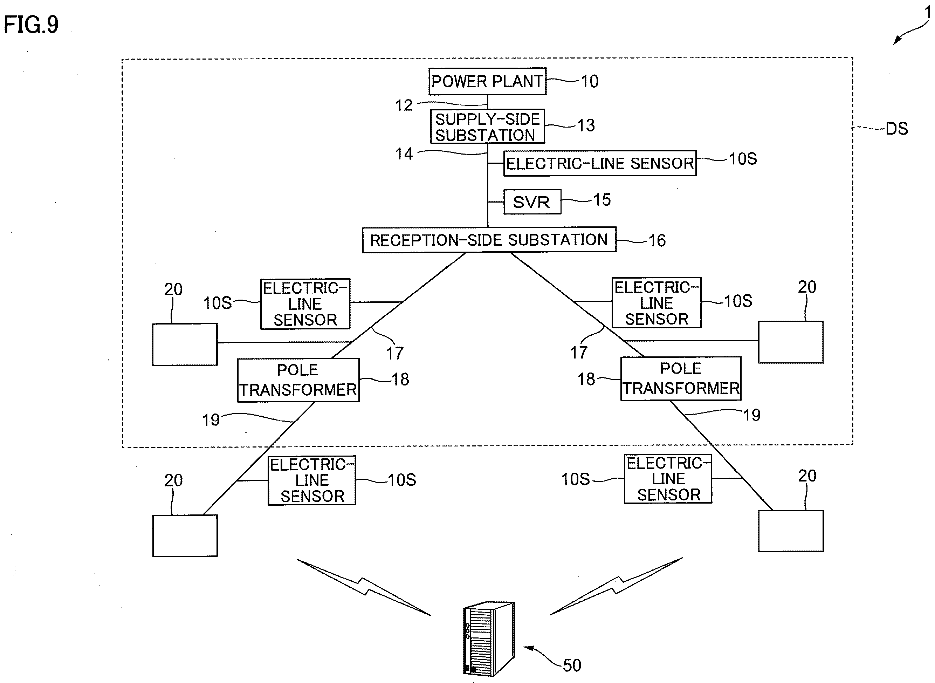

Fig. 9 is a diagram illustrating an example of a voltage adjustment system 1 according to the second embodiment.

The voltage adjustment system 1 as an example of a control system includes a power system DS, a plurality of power consuming facilities 20, and a control server 50.

The power system DS is a system including a facility for supplying power to power consumers. The power system DS includes a power plant 10, a power transmission line 12, a supply-side substation 13, a supply-side power distribution line 14, an automatic voltage regulator (SVR: Step Voltage Regulator) 15, a reception-side substation 16, reception-side power distribution lines 17, pole transformers 18, and consumer-side power distribution lines 19.

The power plant 10 is a facility for generating power. Examples of the power plant 10 include a thermal power plant, a hydroelectric power plant, a nuclear power plant, a solar power plant, a wind power plant, and a geothermal power plant.

The power transmission line 12 is a line through which the current of the power generated by the power plant 10 flows. The power transmission line 12 is provided from the power plant 10 to the supply-side substation 13.

The supply-side substation 13 is a facility that converts a voltage. The supply-side substation 13 is provided closer to the power supplying side than the reception-side substation 16. In the present embodiment, the power plant 10 is a facility located closest to the power supplying side. Two power consuming facilities 20 connected to the consumer-side power distribution lines 19 are facilities located closest to the power receiving side.

The supply-side substation 13 converts the voltage supplied through the power transmission line 12. Examples of the supply-side substation 13 include a substation that converts a voltage of 500000 V to 154000 V, a substation that converts a voltage of 154000 V to 66000 V, and a substation that converts a voltage of 66000 V to 22000 V

The supply-side power distribution line 14 is a line through which a current generated by the application of the voltage converted by the supply-side substation 13 flows. The supply-side power distribution line 14 is provided from the supply-side substation 13 to the reception-side substation 16. The supply-side power distribution line 14 is provided closer to the power supplying side than the reception-side power distribution lines 17.

The SVR 15 adjusts the voltage supplied to the supply-side power distribution line 14. More specifically, the SVR 15 detects a voltage supplied to the supply-side power distribution line 14. When the detected voltage is not within a predetermined range, the SVR 15 adjusts the voltage such that the voltage falls within the predetermined range. The voltage adjustment system 1 may include a reactive power compensation device (SVC: Static Var Compensator) instead of the SVR 15. The SVC adjusts the voltage supplied to the supply-side power distribution line 14. More specifically, the SVC continuously adjusts the reactive power from the lagging direction to the leading direction to make the voltage in the supply-side power distribution line 14 fall within a predetermined range. Alternatively, the voltage adjustment system 1 may include both the SVR 15 and the SVC.

The reception-side substation 16 is a facility that converts the voltage supplied through the supply-side power distribution line 14. Examples of the reception-side substation 16 include a substation that converts the supplied voltage to 6600 V

The reception-side power distribution lines 17 are each a line through which a current generated by the application of the voltage converted by the reception-side substation 16 flows. The reception-side power distribution lines 17 are provided from the reception-side substation 16 to the pole transformers 18. In the present embodiment, two reception-side power distribution lines 17 are provided.

The pole transformers 18 as an example of a power distribution transformer are facilities that convert the voltage supplied through the reception-side power distribution lines 17. Examples of the pole transformers 18 include a transformer that converts a voltage of 6600 V to 200 V and a transformer that converts a voltage of 6600 V to 100 V In the present embodiment, two pole transformers 18 are provided.

The consumer-side power distribution lines 19 are lines through which currents generated by the application of the voltage converted by the pole transformers 18 flow. In the present embodiment, two consumer-side power distribution lines 19 are provided.

As described above, the power system DS is a system for distributing the generated power to power consumers. Accordingly, the power system DS is also regarded as a power distribution system.

The power transmission line 12, the supply-side power distribution line 14, the reception-side power distribution lines 17, and the consumer-side power distribution lines 19 may be simply referred to as "electric lines" unless otherwise distinguished from each other.

In the present embodiment, the power supplied from the power plant 10 is received by the air conditioner 30 in the power consuming facility 20 through the supply-side power distribution line 14, the reception-side power distribution line 17, and the consumer-side power distribution line 19. Accordingly, the supply-side power distribution line 14, the reception-side power distribution line 17, and the consumer-side power distribution line 19 are regarded as electrical paths of the power system DS that are electrically connected to the air conditioner 30.

The voltage adjustment system 1 further includes a plurality of electric-line sensors 10S. In the present embodiment, an electric-line sensor 10S is connected to the supply-side power distribution line 14, an electric-line sensor 10S is connected to each of the reception-side power distribution lines 17, and an electric-line sensor 10S is connected to each of the consumer-side power distribution lines 19. In other words, respective electric-line sensors 10S are provided for the supply-side power distribution line 14, the reception-side power distribution lines 17, and the consumer-side power distribution lines 19.

The electric-line sensors 10S detect a parameter related to apparent power in the connected electric lines. The parameter related to the apparent power is a parameter that affects the apparent power. Examples of the parameter related to the apparent power include apparent power, reactive power, harmonic voltage, current, voltage, power factor, the amount of apparent power over a predetermined period of time, and the amount of reactive power over a predetermined period of time. The current as a parameter related to the apparent power includes a harmonic current. The harmonic voltage or the harmonic current may be a harmonic voltage or a harmonic current of a specific order. The specific order may be any order and is, for example, the fifth order. Examples of the parameter related to the apparent power further include the total harmonic distortion (THD) of a current and the THD of a voltage. The THD of a current is calculated from equation (1) below. The THD of a voltage is calculated from equation (2) below.

$$THD = \sqrt{\sum_{n=2}^{40} \left(\frac{I_n}{I_1}\right)^2} \cdots (1)$$

$$THD = \sqrt{\sum_{n=2}^{40} \left(\frac{V_n}{V_1}\right)^2} \cdots (2)$$

In equation (1) above, I1 is a fundamental current. Further, In is an n-th harmonic current.

In equation (2) above, V1 is a fundamental voltage. Further, Vn is an n-th harmonic voltage.

For example, the electric-line sensors 10S detect the parameter related to the apparent power described above at intervals of a predetermined time. The predetermined time may be any time and is, for example, one hour. In response to detecting the parameter related to the apparent power, the electric-line sensors 10S create information related to the apparent power on the basis of the detection result. The information related to the apparent power created by the electric-line sensors 10S may be hereinafter referred to as electric-line information. Examples of the electric-line information include information indicating a parameter detected by the electric-line sensors 10S for the apparent power in the electric lines. The electric-line information may be information indicating a waveform of a current detected by the electric-line sensors 10S in the electric lines. In response to creating the electric-line information, the electric-line sensors 10S transmit the created electric-line information to the control server 50 together with electric-line identification information for identifying the electric lines associated with the electric-line information.

In the present embodiment, four power consuming facilities 20 are provided. In the present embodiment, a power consuming facility 20 is connected to each of the two reception-side power distribution lines 17, and a power consuming facility 20 is connected to each of the two consumer-side power distribution lines 19. As in the example illustrated in Fig. 1, each of the power consuming facilities 20 includes the facility sensor 20S, the air conditioner 30, and the load 40.

Further, the AF 33 of the air conditioner 30 according to the present embodiment supplies a current to an electric line to adjust the parameter related to the apparent power in the electric line. Examples of the parameter related to the apparent power in the electric line include a harmonic current in the electric line, reactive power in the electric line, a power factor of the electric line, and a voltage of the electric line. As the parameter related to the apparent power in the electric line changes, the apparent power in the electric line also changes. Accordingly, the adjustment of the individual parameters related to the apparent power in the electric line described above is regarded as the adjustment of the apparent power in a broad sense. Each parameter related to the apparent power to be adjusted may be hereinafter collectively referred to as "apparent power".

The number of power plants 10, the number of power transmission lines 12, the number of supply-side substations 13, the number of reception-side substations 16, the number of pole transformers 18, and the number of consumer-side power distribution lines 19, which are provided in the power system DS, are not limited to those in the illustrated example. The number of power plants 10, the number of power transmission lines 12, the number of supply-side substations 13, the number of reception-side substations 16, the number of pole transformers 18, and the number of consumer-side power distribution lines 19, which are provided in the power system DS, may be larger or smaller than those in the illustrated example. In addition, the number of target facilities among the number of power plants 10, the number of power transmission lines 12, the number of supply-side substations 13, the number of reception-side substations 16, the number of pole transformers 18, and the number of consumer-side power distribution lines 19 being smaller than that in the illustrated example includes the absence of the target facilities.

Further, the number of the supply-side power distribution lines 14 and the number of reception-side power distribution lines 17 are not limited to those in the illustrated example. The power system DS may include more supply-side power distribution lines 14 and reception-side power distribution lines 17 than the numbers of supply-side power distribution lines 14 and reception-side power distribution lines 17 illustrated in Fig. 9. In this case, an electric-line sensor 10S may be provided for each supply-side power distribution line 14, or an electric-line sensor 10S may be provided for each reception-side power distribution line 17.

Further, the number of power consuming facilities 20 is not limited to that in the illustrated example. The voltage adjustment system 1 may include more power consuming facilities 20 than the number of power consuming facilities 20 illustrated in Fig. 9. Further, each power consuming facility 20 may include a plurality of air conditioners 30.

The parameter detected by the electric-line sensors 10S is not limited to one type of parameter related to the apparent power. The electric-line sensors 10S may detect a plurality of types of parameters among the parameters described above. The electric-line information indicating each of the detected plurality of types of parameters may be transmitted to the control server 50. An electric-line sensor 10S may be provided for each type of parameter to be detected.

The control server 50 is a server device that controls the operation of the air conditioner 30. More specifically, the control server 50 controls the operation of the air conditioner 30 for adjusting the apparent power in an electric line.

The control server 50 is implemented by, for example, a computer. The control server 50 may be configured by a single computer or may be implemented by a plurality of computers performing distributed processing. Alternatively, the control server 50 may be implemented on virtual hardware provided by cloud computing.

In the present embodiment, the control server 50 is connected to each electric-line sensor 10S and each air conditioner 30 via a network (not illustrated). The network for connecting the control server 50 to each electric-line sensor 10S and each air conditioner 30 may be any network over which data can be transmitted and received. A communication line used for data transmission and reception may be wired or wireless, or may be power line communication (PLC). A connection to a communication destination via a plurality of networks or communication lines may be used.

The number of control servers 50 is not limited to that in the illustrated example. The voltage adjustment system 1 may include two or more control servers 50. A control server 50 may be provided for each power consuming facility 20, for example.

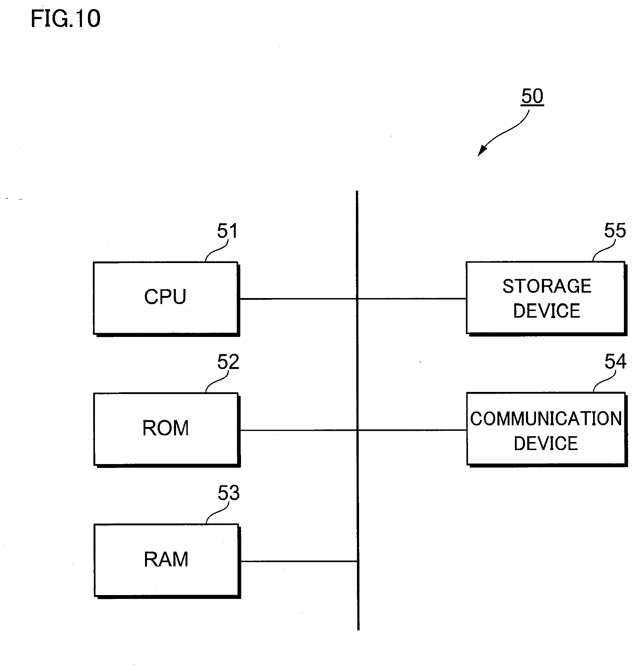

Fig. 10 is a diagram illustrating a hardware configuration of the control server 50.

The control server 50 includes a CPU 51, a ROM (Read Only Memory) 52, and a RAM (Random Access Memory) 53. The control server 50 further includes a storage device 55 that is constituted by a hard disk device or the like and stores information. The control server 50 further includes a communication device 54 (communication I/F) that performs communication with the outside.

The control server 50 also includes an input device used for inputting information, such as a keyboard and a mouse, and a display device such as a liquid crystal display.

The ROM 52 and the storage device 55 store a program to be executed by the CPU 51. The CPU 51 reads a program stored in the ROM 52 or the storage device 55 and executes the program by using the RAM 53 as a work area.

The CPU 51 executes a program stored in the ROM 52 or the storage device 55 to implement each functional unit described below.

The program to be executed by the CPU 51 can be provided to the control server 50 in a state of being stored in a computer-readable recording medium such as a magnetic recording medium (a magnetic tape, a magnetic disk, or the like), an optical recording medium (an optical disk or the like), a magneto-optical recording medium, or a semiconductor memory. Alternatively, the program to be executed by the CPU 51 may be provided to the control server 50 by using a communication method such as the Internet.

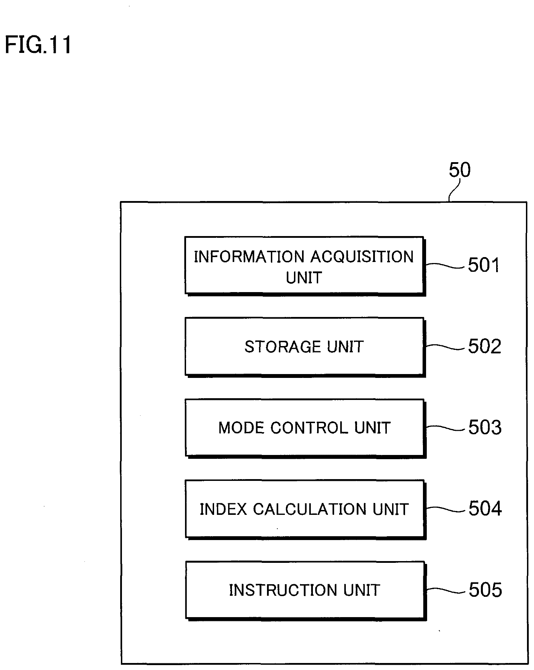

Fig. 11 is a diagram illustrating a functional configuration of the control server 50.

The control server 50 includes an information acquisition unit 501, a storage unit 502, a mode control unit 503, an index calculation unit 504, and an instruction unit 505.

The information acquisition unit 501 as an example of an acquisition section acquires information transmitted to the control server 50. In one example, the information acquisition unit 501 acquires electric-line information transmitted from the electric-line sensors 10S to the control server 50. The information acquired by the information acquisition unit 501 is stored in the storage unit 502.

The storage unit 502 stores information.

The mode control unit 503 determines a mode for controlling the operation of the AF 33 in the air conditioner 30. The mode control unit 503 has an internal mode and an external mode. The external mode is a mode in which the AF 33 supplies the fundamental reactive power to the power receiving point 30P of the air conditioner 30 on the basis of information on a sensor disposed outside the power consuming facility 20. Examples of the sensor disposed outside the power consuming facility 20 include the electric-line sensors 10S. Further, the mode control unit 503 according to the present embodiment determines any one of the internal mode and the external mode as the mode for controlling the operation of the AF 33 in accordance with a predetermined condition.

When the mode control unit 503 indicates the external mode, the control server 50 calculates an index related to power required to be supplied to an electric line to improve the apparent power in the electric line, on the basis of the electric-line information acquired from the electric-line sensors 10S. Then, the control server 50 transmits the calculated index to the air conditioner 30 as the value of the instruction for the supply of the apparent power to instruct the air conditioner 30 to supply the apparent power. The index related to power required to be supplied to an electric line to improve the apparent power in the electric line may be hereinafter referred to as an adjustment-required index. Examples of the adjustment-required index include a power and a current required to be supplied to an electric line to improve the apparent power in the electric line.

When the mode control unit 503 indicates the internal mode, the control server 50 does not perform the calculation of the adjustment-required index based on the electric-line information. In this case, the control server 50 instructs the air conditioner 30 to supply the fundamental reactive power to the power receiving point 30P of the air conditioner 30 on the basis of information on the sensors provided inside the power consuming facility 20.

The index calculation unit 504 calculates the adjustment-required index when the mode control unit 503 indicates the external mode. The index calculation unit 504 calculates, based on the latest electric-line information regarding an electric line to be adjusted, an adjustment-required index for the electric line.

An example of a method by which the index calculation unit 504 calculates the adjustment-required index will be described. The index calculation unit 504 calculates the adjustment-required index such that the adjustment-required index increases as the difference between the apparent power indicated in the latest electric-line information regarding the electric line to be adjusted and a reference value determined in advance for the apparent power in the electric line to be adjusted increases.

When the mode control unit 503 indicates the internal mode, the index calculation unit 504 does not calculate the adjustment-required index.

When the mode control unit 503 indicates the external mode, the instruction unit 505 transmits the adjustment-required index calculated by the index calculation unit 504 to the air conditioner 30 as the value of the instruction for the supply of the apparent power to instruct the air conditioner 30 to supply the apparent power. When the mode control unit 503 indicates the internal mode, the instruction unit 505 instructs the air conditioner 30 to supply the fundamental reactive power to the power receiving point 30P of the air conditioner 30 on the basis of the information on the sensors provided inside the power consuming facility 20.

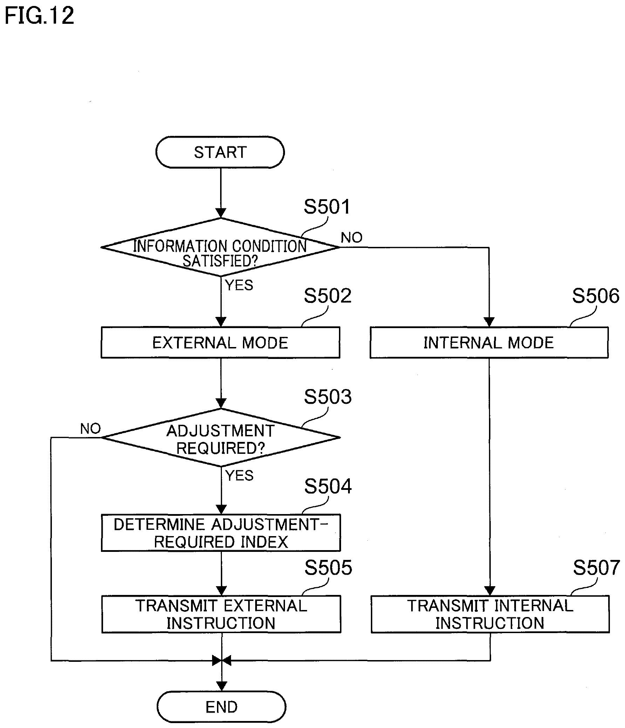

Fig. 12 is a flowchart illustrating an air conditioning control process. The air conditioning control process is a process in which the control server 50 controls the air conditioner 30. In the present embodiment, the air conditioning control process is started when a predetermined time elapses. The predetermined time may be any time and is, for example, one hour. The air conditioning control process is performed for each electric line. The electric line for which the air conditioning control process is to be performed may be hereinafter referred to as a target electric line.

The mode control unit 503 determines whether information condition is satisfied (S501). The information condition is a condition defined to determine any one of the external mode and the internal mode for control by the mode control unit 503. The information condition is defined for the electric-line information. In the present embodiment, two conditions are defined as information conditions.

The first information condition is that the latest electric-line information regarding the target electric line has been acquired by the information acquisition unit 501. If an abnormality occurs in a network connecting the control server 50 to an electric-line sensor 10S, the control server 50 may fail to receive the electric-line information transmitted from the electric-line sensor 10S. If the information acquisition unit 501 has not acquired the latest electric-line information at the time when the electric-line information regarding the target electric line would be received by the control server 50, the mode control unit 503 determines that the information condition is not satisfied.

The second information condition is that the calculation of the adjustment-required index based on the latest electric-line information by the index calculation unit 504 is possible. Even if an abnormality occurs in a network connecting the control server 50 to an electric-line sensor 10S, part of the electric-line information transmitted from the electric-line sensor 10S may be received by the control server 50. In this case, the content of the electric-line information received by the control server 50 may be incorrect because, for example, the entirety of the electric-line information has not been received by the control server 50. If the calculation of the adjustment-required index based on the electric-line information by the index calculation unit 504 is not possible because the content of the electric-line information is incorrect, the mode control unit 503 determines that the information condition is not satisfied.

If any one of the two conditions defined as information conditions is not satisfied, the adjustment-required index based on the latest electric-line information is not transmitted to the air conditioner 30. Accordingly, the information condition is also regarded as the acquisition of the adjustment-required index by the acquisition unit 331 of the air conditioner 30. In other words, the information condition is also regarded as a condition defined for the adjustment-required index.

If the mode control unit 503 determines that the information condition is satisfied (YES in S501), the mode control unit 503 determines the external mode as the mode for controlling the operation of the AF 33 (S502).

The index calculation unit 504 determines whether to require the adjustment of the apparent power in the target electric line (S503). The index calculation unit 504 determines whether the difference between the apparent power indicated in the latest electric-line information regarding the target electric line and the reference value set for the apparent power in the target electric line is equal to or greater than a predetermined value to determine whether to require the adjustment of the apparent power in the target electric line.

If the index calculation unit 504 determines that the adjustment of the apparent power in the target electric line is not required (NO in S503), the air conditioning control process ends. In this case, the air conditioner 30 does not adjust the apparent power in the electric line.

On the other hand, if the index calculation unit 504 determines that the adjustment of the apparent power in the target electric line is required (YES in S503), the index calculation unit 504 calculates the adjustment-required index on the basis of the latest electric-line information (S504).

The instruction unit 505 transmits, to the air conditioner 30, an instruction for controlling the air conditioner 30 in the external mode (S505). The instruction for controlling the air conditioner 30 in the external mode may be hereinafter referred to as an external instruction. The air conditioner 30 to be instructed by the instruction unit 505 may be hereinafter referred to as a target device. The external instruction includes an instruction to set the external mode as the mode for controlling the operation of the AF 33. The external instruction further includes, as the value of the instruction for the supply of the apparent power, the adjustment-required index calculated by the index calculation unit 504.

If the mode control unit 503 determines that the information condition is not satisfied (NO in S501), the mode control unit 503 determines the internal mode as the mode for controlling the operation of the AF 33 (S506).

The instruction unit 505 transmits, to the air conditioner 30, an instruction for controlling the air conditioner 30 in the internal mode (S507). The instruction for controlling the air conditioner 30 in the internal mode may be hereinafter referred to as an internal instruction. The internal instruction includes an instruction to set the internal mode as the mode for controlling the operation of the AF 33.

In the present embodiment, the air conditioner 30 to be instructed by the instruction unit 505 is the air conditioner 30 in the power consuming facility 20 connected to the target electric line.

The air conditioner 30 to be instructed by the instruction unit 505 may be an air conditioner 30 provided closer to the power receiving side than the target electric line. In this case, in the air conditioning control process in which a reception-side power distribution line 17 is set as the target electric line, the air conditioner 30 connected to the target electric line and the air conditioner 30 connected to the target electric line through the consumer-side power distribution line 19 are the air conditioners 30 to be instructed by the instruction unit 505. In the air conditioning control process in which the supply-side power distribution line 14 is set as the target electric line, the air conditioners 30 connected to the target electric line through the reception-side power distribution lines 17 and the consumer-side power distribution lines 19 are the air conditioners 30 to be instructed by the instruction unit 505. In other words, in the illustrated example, in the air conditioning control process in which the supply-side power distribution line 14 is set as the target electric line, all of the air conditioners 30 provided in the voltage adjustment system 1 are the air conditioners 30 to be instructed by the instruction unit 505.

Alternatively, the air conditioner 30 to be instructed by the instruction unit 505 may be an air conditioner 30 provided closer to the power supplying side than the target electric line. In one example, when a consumer-side power distribution line 19 is the target electric line, the instruction unit 505 may transmit an instruction to the air conditioner 30 in the power consuming facility 20 connected to the reception-side power distribution line 17 to supply the apparent power from the air conditioner 30 to the consumer-side power distribution line 19.

In the present embodiment, it has been described that the air conditioning control process is performed for each electric line. In this case, the mode for controlling the operation of the AF 33 in the target device is determined to be the internal mode or the external mode for each electric line. However, the mode for controlling the operation of the AF 33 in the target device does not need to be determined for each electric line. The mode for controlling the operation of the AF 33 in the target device may be determined to be the internal mode or the external mode as a mode common to the individual electric lines.

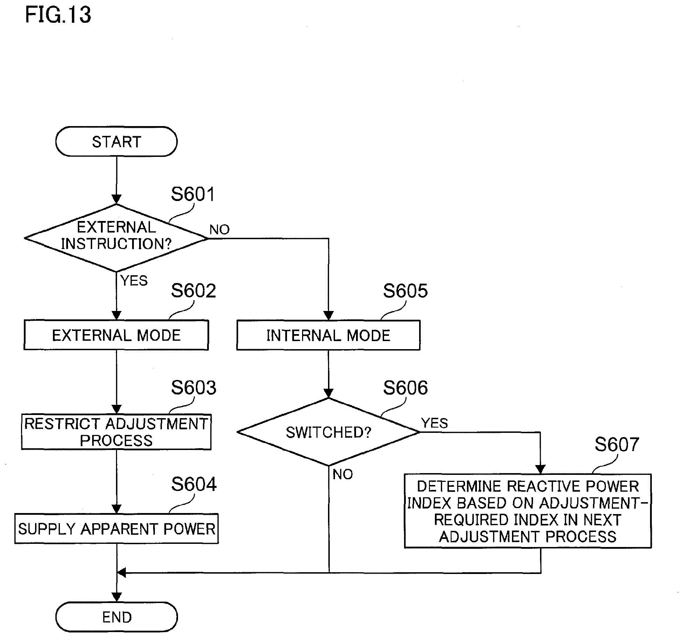

Fig. 13 is a flowchart illustrating a mode control process. The mode control process is a process in which the mode determination unit 334 of the air conditioner 30 determines a mode for controlling the operation of the AF 33. In the present embodiment, the mode control process is started in response to the acquisition unit 331 of the air conditioner 30 acquiring the external instruction or the internal instruction (see Fig. 12).

The mode determination unit 334 determines whether the instruction acquired by the acquisition unit 331 is the external instruction (S601).

If the instruction acquired by the acquisition unit 331 is the external instruction (YES in S601), the mode determination unit 334 determines the external mode as the mode for controlling the operation of the AF 33 (S602).

The adjustment determination unit 335 restricts the adjustment process (see Fig. 7 or 8) (S603). In other words, in the external mode, even if the air conditioning sensor information is newly acquired by the acquisition unit 331, the adjustment process is not executed.

When the instruction acquired by the acquisition unit 331 is the external instruction, the external instruction includes the adjustment-required index. Then, the supply unit 340 supplies the apparent power corresponding to the adjustment-required index to the power receiving point 30P of the air conditioner 30 (S604). In this case, the apparent power supplied from the supply unit 340 is supplied to the target electric line through the power receiving point 30P of the air conditioner 30, thereby allowing the adjustment of the apparent power in the target electric line. With the adjustment of the apparent power in the target electric line, the voltage input to the air conditioner 30 is adjusted.

The adjustment-required index is also regarded as power information related to the apparent power to be output from the air conditioner 30. The acquisition unit 331 is also regarded as a power information acquisition section that acquires power information.

If the instruction acquired by the acquisition unit 331 is the internal instruction (NO in S601), the mode determination unit 334 determines the internal mode as the mode for controlling the operation of the AF 33 (S605).

The mode determination unit 334 determines whether the mode for controlling the operation of the AF 33 has been switched from the external mode to the internal mode in the current mode control process (S606). The mode determination unit 334 determines whether the mode has been switched from the external mode to the internal mode by determining whether the external mode is maintained until the current mode control process is performed. In other words, the mode determination unit 334 determines whether the external mode is determined in the previous mode control process to determine whether the mode is switched from the external mode to the internal mode in the current mode control process.

If the internal mode is determined in the previous mode control process, in other words, if the mode is not switched from the external mode to the internal mode in the current mode control process (NO in S606), the mode control process ends. In this case, in response to the air conditioning sensor information being newly acquired by the acquisition unit 331, the adjustment process (Fig. 7 or 8) is executed.

If the mode is switched from the external mode to the internal mode in the current mode control process (YES in S606), the process proceeds to the next step. In this case, in the next adjustment process, the supply amount determination unit 339 determines the reactive power index on the basis of the adjustment-required index used last as the value of the instruction for the supply of the apparent power when the target device was in the external mode (S607). The adjustment-required index used last as the value of the instruction for the supply of the apparent power when the target device was in the external mode may be hereinafter referred to as a last index. The last index is also regarded as the adjustment-required index included in the external instruction most recently transmitted to the target device.

If the internal mode is determined as the mode for controlling the operation of the AF 33, as described in the first embodiment, the air conditioner 30 determines the reactive power index on the basis of the air conditioning sensor information, and supplies the fundamental reactive power corresponding to the determined reactive power index to the power receiving point 30P. Even in this case, the voltage input to the air conditioner 30 is adjusted. Further, the fundamental reactive power supplied from the air conditioner 30 is supplied to the electric line through the power receiving point 30P, thereby allowing the adjustment of the apparent power in the electric line.

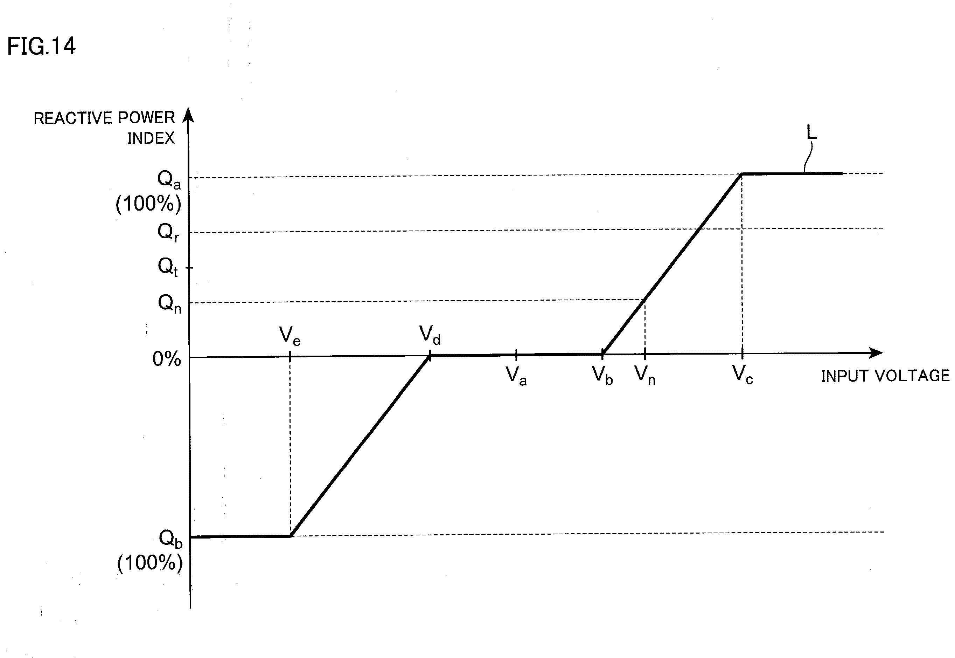

Fig. 14 is a diagram illustrating an example of a method by which the supply amount determination unit 339 determines a reactive power index for the target device.

Next, an example of a method by which the supply amount determination unit 339 determines the reactive power index for the target device, which has been described in step 607 of the mode control process (see Fig. 13), will be described.

Fig. 14 illustrates a Volt-Var curve L.

In the following, it is assumed that the latest input voltage is identified as Vn in the adjustment process. It is also assumed that the last index is a last index Qr.

When the latest input voltage is the input voltage Vn, the supply amount determination unit 339 identifies the index corresponding to the input voltage Vn as an index Qn from the relationship between the input voltage Vn and the Volt-Var curve L.

In this example, the supply amount determination unit 339 determines the average value of the index Qn corresponding to the latest input voltage Vn and the last index Qr as the reactive power index. In the illustrated example, a reactive power index Qt is determined as the average value of the index Qn and the last index Qr.

When the last index and the reference index are in different units, a value obtained by converting the unit of the last index into the same unit as that of the reference index may be used as the index Qr.

As described above, in the present embodiment, the AF 33 further has an external mode for supplying the fundamental reactive power from the supply unit 340 to the power receiving point 30P of the air conditioner 30 on the basis of the adjustment-required index. The external mode is also regarded as a second supply mode.

In this case, it is possible to adjust the voltage input to the air conditioner 30 in a mode according to the situation from among the internal mode and the external mode.

In the present embodiment, furthermore, the mode control unit 503, the index calculation unit 504, and the instruction unit 505 of the control server 50 have an internal mode for supplying the fundamental reactive power from the air conditioner 30 to the power receiving point 30P in accordance with the magnitude of the input voltage input to the air conditioner 30, and an external mode for supplying the fundamental reactive power from the air conditioner 30 to the power receiving point 30P on the basis of the electric-line information. The mode control unit 503, the index calculation unit 504, and the instruction unit 505 of the control server 50 are regarded as a control section.

In this case, it is possible to adjust the voltage input to the air conditioner 30 in a mode according to the situation from among the internal mode and the external mode.

In the present embodiment, furthermore, the AF 33 determines any one of the internal mode and the external mode as the mode for controlling the operation of the AF 33 in accordance with whether the information condition is satisfied. In other words, the AF 33 performs control in the internal mode or the external mode in accordance with a condition defined for the adjustment-required index.

In this case, it is possible to adjust the voltage input to the air conditioner 30 in a mode according to the situation for the adjustment-required index from among the internal mode and the external mode.

In the present embodiment, in particular, the information condition is defined for the acquisition of the adjustment-required index using the acquisition unit 331 of the air conditioner 30.

In this case, it is possible to adjust the voltage input to the air conditioner 30 in a mode according to the situation for the acquisition of the adjustment-required index using the acquisition unit 331 from among the internal mode and the external mode.

In the present embodiment, furthermore, when switching from the external mode to the internal mode, the AF 33 causes the supply unit 340 to supply the fundamental reactive power to the power receiving point 30P of the air conditioner 30 on the basis of the adjustment-required index. The adjustment-required index is information created by the control server 50 in the external mode. Accordingly, the adjustment-required index is also regarded as mode information related to the external mode.

In this case, it is possible to associate the supply of the fundamental reactive power by the supply unit 340 in the external mode with the supply of the fundamental reactive power by the supply unit 340 in the internal mode.

In the present embodiment, in particular, when switching from the external mode to the internal mode, the AF 33 determines the reactive power index in accordance with the relationship between the last index and the reference index. In other words, when switching from the external mode to the internal mode, the AF 33 determines the reactive power index in accordance with the relationship between the last index and the index related to the supply in the internal mode determined in accordance with the magnitude of the input voltage.

In this case, it is possible to associate the supply of the fundamental reactive power by the supply unit 340 in the external mode with the supply of the fundamental reactive power by the supply unit 340 in the internal mode in accordance with the relationship between the last index and the reference index.

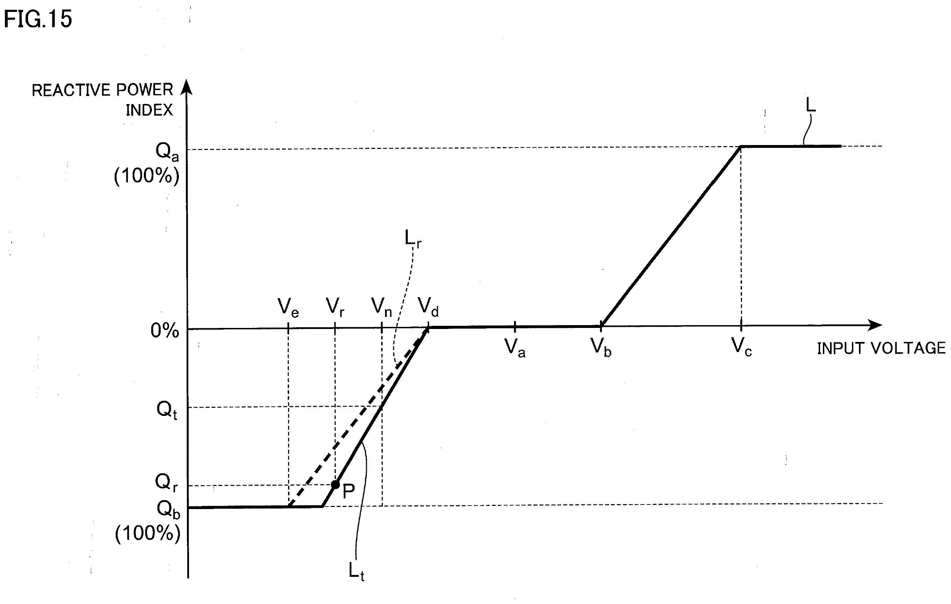

Fig. 15 is a diagram illustrating another example of the method by which the supply amount determination unit 339 determines a reactive power index for the target device.

Next, another example of the method by which the supply amount determination unit 339 determines the reactive power index for the target device, which has been described in step 607 of the mode control process (see Fig. 13), the example being different from the method illustrated in Fig. 14, will be described.

In this example, the supply amount determination unit 339 corrects the Volt-Var curve L on the basis of the last index.

Also in the following, it is assumed that the latest input voltage is identified as Vn in the adjustment process. It is also assumed that the last index is a last index Qr. The slope of a portion of the Volt-Var curve L from the unnecessary lower limit value Vd to the maximum leading value Ve before the Volt-Var curve L is corrected is referred to as a slope Lr.

In this example, the input voltage identification unit 338 identifies the input voltage when the target device supplies the apparent power corresponding to the last index Qr. More specifically, the input voltage identification unit 338 identifies the input voltage from the air conditioning sensor information for the target device, which has been acquired by the acquisition unit 331, when the target device supplies the apparent power corresponding to the last index Qr. In the illustrated example, the input voltage is assumed to be identified as an input voltage Vr smaller than the unnecessary lower limit value Vd and larger than the maximum leading value Ve. When the input voltage Vr is identified, in Fig. 15, coordinates P defined by the input voltage Vr on the horizontal axis and the last index Qr on the vertical axis are determined.

Then, the supply amount determination unit 339 corrects the slope Lr of the Volt-Var curve L from the unnecessary lower limit value Vd to the maximum leading value Ve, which is a slope in a range where the input voltage Vr is located. More specifically, the supply amount determination unit 339 corrects the slope Lr to a slope Lt, which is a slope of a straight line connecting the coordinates P and the coordinates of the position of the unnecessary lower limit value Vd on the Volt-Var curve L.

Then, the supply amount determination unit 339 determines the reactive power index Qt from the relationship between the Volt-Var curve L after correction and the input voltage Vn.

The method by which the supply amount determination unit 339 corrects the Volt-Var curve L is not limited to that in the example illustrated in Fig. 15.

The supply amount determination unit 339 may correct the Volt-Var curve L such that the Volt-Var curve L is moved to the right in Fig. 15 until the Volt-Var curve L before correction in Fig. 15 reaches the coordinates P. Alternatively, the supply amount determination unit 339 may correct the Volt-Var curve L such that the Volt-Var curve L is moved downward in Fig. 15 until the Volt-Var curve L before correction in Fig. 15 reaches the coordinates P. In this way, the supply amount determination unit 339 may correct the entire Volt-Var curve L. In other words, when correcting the Volt-Var curve L, the supply amount determination unit 339 does not need to change the slope of the Volt-Var curve L.

In the present disclosure, in a case of switching from the external mode to the internal mode, the supply amount determination unit 339 determines the reactive power index in accordance with the relationship between the last index and the reference index. However, the present disclosure is not limited thereto. In a case of switching from the external mode to the internal mode, the supply amount determination unit 339 may determine the reactive power index in accordance with the relationship between the reference index and the fundamental reactive power supplied from the supply unit 340 in accordance with the last index. In other words, in a case of switching from the external mode to the internal mode, the information used for the determination of the reactive power index by the supply amount determination unit 339 may be, instead of the last index, the value of the fundamental reactive power supplied from the supply unit 340 in accordance with the last index. In this case, the value of the fundamental reactive power supplied from the supply unit 340 in accordance with the last index is also regarded as the mode information related to the external mode.

In the present disclosure, furthermore, it has been described that the mode for controlling the operation of the AF 33 is determined to be the internal mode or the external mode for each air conditioner 30. However, the present disclosure is not limited thereto.

When the target device is determined to be in the internal mode or the external mode in the mode control process, the control server 50 may transmit an instruction to all of the air conditioners 30 provided in the voltage adjustment system 1 to perform control such that all of the air conditioners 30 are in the same mode as the target device.

In the present disclosure, furthermore, it has been described that, in a case of switching from the external mode to the internal mode in the mode control process, the supply amount determination unit 339 determines the reactive power index on the basis of the adjustment-required index. The adjustment-required index used to determine the reactive power index may be an adjustment-required index that is for adjusting the target electric line and that is used last for the target device as the value of the instruction for the supply of the apparent power. Alternatively, the adjustment-required index used to determine the reactive power index may be an adjustment-required index used last for the target device as the value of the instruction for the supply of the apparent power, regardless of whether the adjustment-required index is for adjusting the target electric line.

In the present disclosure, furthermore, it has been described that the acquisition unit 331 acquires all of the pieces of power information. However, the present disclosure is not limited thereto. The power information may be acquired by a functional unit of the air conditioner 30 different from a functional unit that acquires the voltage information and the position information. In other words, the voltage information acquisition section, the position information acquisition section, and the power information acquisition section may be the same functional unit or different functional units in the air conditioner 30.

Further, the information condition described in the present disclosure is not limited to that in the examples described above.

The information condition may be that the latest adjustment-required index calculated by the control server 50 has been acquired by the acquisition unit 331 of the air conditioner 30. If an abnormality occurs in a network connecting the control server 50 to the air conditioner 30, the acquisition unit 331 of the air conditioner 30 may fail to acquire the adjustment-required index transmitted from the control server 50. If the acquisition unit 331 has not acquired the latest adjustment-required index at the time when the adjustment-required index would be received by the air conditioner 30, the mode control unit 503 of the control server 50 may determine that the information condition is not satisfied.

Alternatively, the information condition may be that the supply of the fundamental reactive power based on the latest adjustment-required index by the supply unit 340 is possible.

Even if an abnormality occurs in a network connecting the control server 50 to the air conditioner 30, part of the adjustment-required index transmitted from the control server 50 may be received by the air conditioner 30. In this case, the content of the adjustment-required index received by the air conditioner 30 may be incorrect because, for example, the entirety of the adjustment-required index has not been received by the air conditioner 30. If the supply of the fundamental reactive power based on the adjustment-required index by the supply unit 340 is not possible because the content of the adjustment-required index is incorrect, the mode control unit 503 may determine that the information condition is not satisfied.

If the correct adjustment-required index is not receivable by the air conditioner 30, the mode determination unit 334 may determine the internal mode as the mode for controlling the operation of the AF 33 regardless of the instruction from the control server 50.

In the present disclosure, furthermore, an example in which the control server 50 is provided outside the power consuming facility 20 is illustrated (see Fig. 9). However, the present disclosure is not limited thereto.

The control server 50 may be provided inside the power consuming facility 20. Alternatively, the control server 50 may be provided inside each of the power consuming facilities 20 provided in the voltage adjustment system 1.

In the present disclosure, furthermore, it has been described that the control server 50 may be implemented by a plurality of computers performing distributed processing. As an example in which the control server 50 is implemented by a plurality of computers performing distributed processing, the voltage adjustment system 1 may include a first control server and a second control server, instead of the control server 50. The first control server and the second control server are an example of a plurality of computers that implement the control server 50. The first control server is provided outside the power consuming facility 20, and the second control server is provided inside the power consuming facility 20. The first control server performs an air conditioning control process (see Fig. 12) on the basis of the electric-line information acquired from the electric-line sensor 10S, and transmits the external instruction or the internal instruction to the second control server. The second control server may transmit the external instruction or the internal instruction received from the first control server to the air conditioner 30, thereby causing the supply unit 340 of the air conditioner 30 to supply the fundamental reactive power to the power receiving point 30P.

When the adjustment-required index included in the external instruction transmitted from the first control server is not normally received by the second control server due to an abnormality or the like of the network connecting the first control server and the second control server, the second control server may transmit the internal instruction to the air conditioner 30 regardless of the instruction from the first control server. In other words, the second control server may determine whether the information condition is satisfied, and transmit the external instruction or the internal instruction to the air conditioner 30 in accordance with the determination result. In this case, the information condition used by the second control server for the determination may be any of the conditions described above.

In the present disclosure, furthermore, it has been described that the target electric line is any one of the supply-side power distribution line 14, the reception-side substation 16, and the consumer-side power distribution lines 19. However, the present disclosure is not limited thereto. The target electric line may be the power transmission line 12.

In the present disclosure, furthermore, it has been described that in the internal mode, the air conditioner 30 may identify the input voltage on the basis of the facility-sensor information acquired from the facility sensor 20S, determine the reactive power index from the identified input voltage, and supply the fundamental reactive power corresponding to the determined reactive power index. The network for the air conditioner 30 and the facility sensor 20S may have a different connection method from the network for the control server 50 and each electric-line sensor 10S. In one example, the control server 50 and each electric-line sensor 10S may be connected to each other in a wireless manner, and the air conditioner 30 and the facility sensor 20S may be connected to each other in a wired manner. In this case, even if an abnormality occurs in the connection between the control server 50 and each electric-line sensor 10S, the air conditioner 30 can implement the supply of the fundamental reactive power corresponding to the input voltage in the internal mode on the basis of the facility sensor acquired from the facility sensor 20S. In other words, as compared to a configuration in which the network for the air conditioner 30 and the facility sensor 20S has the same connection method as the network for the control server 50 and each electric-line sensor 10S, it is possible to suppress a situation in which the adjustment of the voltage input to the air conditioner 30 is not implementable in the external mode or the internal mode.

Alternatively, the network for the air conditioner 30 and the facility sensor 20S may have a different connection method from the network for the control server 50 and the air conditioner 30. Further, the network for the air conditioner 30 and the facility sensor 20S, the network for the control server 50 and each electric-line sensor 10S, and the network for the control server 50 and the air conditioner 30 may have different connection methods. Alternatively, the connection method for the first control server and the second control server described above may be different from that for the second control server and the air conditioner 30 described above.

In the present disclosure, furthermore, it has been described that the supply section of the air conditioner 30 supplies the apparent power to the power receiving point 30P of the air conditioner 30. The supply of the apparent power from the supply section includes the supply of each of the parameters related to the apparent power described above from the supply section.

In the present disclosure, furthermore, it has been described that the supply section of the air conditioner 30 supplies the fundamental reactive power to the power receiving point 30P of the air conditioner 30.

In the supply of the fundamental reactive power from the supply section to the power receiving point 30P, the reactive current of the fundamental reactive power is supplied to the power receiving point 30P. Accordingly, the supply of the fundamental reactive power from the supply section includes the supply of the reactive current from the supply section.

In the present disclosure, furthermore, it has been described that the control section of the air conditioner 30 causes the supply section to supply the fundamental reactive power to the power receiving point 30P of the air conditioner 30. Examples of the specific parameter include power, reactive current, and voltage.

The control section of the air conditioner 30 instructs the supply section to supply a specific parameter related to the apparent power, thereby implementing the supply of the fundamental reactive power from the supply unit 340. Examples of the specific parameter include fundamental reactive power and reactive current. Accordingly, the control section causing the supply section to supply the fundamental reactive power includes the control section instructing the supply section to supply the fundamental reactive power and the control section instructing the supply section to supply the reactive current. Further, the control server 50 causing the supply section to supply the fundamental reactive power includes the control server 50 instructing the supply section to supply the fundamental reactive power and the control server 50 instructing the supply section to supply the reactive current.

Further, the control section of the air conditioner 30 controls a specific parameter for the supply section, thereby implementing the supply of the fundamental reactive power from the supply section. Examples of the specific parameter include fundamental reactive power, reactive current, and voltage. Accordingly, the control section controlling the supply section to supply the fundamental reactive power includes the control section controlling the fundamental reactive power of the supply section, the control section controlling the reactive current of the supply section, and the control section controlling the voltage of the supply section. Further, the control server 50 controlling the supply section to supply the fundamental reactive power includes the control server 50 controlling the fundamental reactive power of the supply section, the control server 50 controlling the reactive current of the supply section, and the control server 50 controlling the voltage of the supply section.

In the present disclosure, furthermore, the control server 50 is configured to control the operation of the air conditioner 30. However, the present disclosure is not limited thereto.

For example, the air conditioner 30 may have the functions of the control server 50. In other words, the air conditioner 30 may include the CPU 51 (see Fig. 10), the ROM 52, the RAM 53, the communication device 54, and the storage device 55 to implement the various functions. The air conditioner 30 may have the functions of the information acquisition unit 501, the storage unit 502, the mode control unit 503, the index calculation unit 504, the instruction unit 505, and so on. In response to acquiring the electric-line information from the electric-line sensor 10S in the external mode, the air conditioner 30 may determine the adjustment-required index on the basis of the acquired electric-line information and supply the fundamental reactive power to the power receiving point 30P in accordance with the determined adjustment-required index.

Each of the embodiments described above can be understood as follows.

The control section according to the present disclosure has an internal mode for supplying, in accordance with the magnitude of an input voltage identified from the air conditioning sensor information acquired by the acquisition unit 331, the fundamental reactive power to the power receiving point 30P of the input voltage in the air conditioner 30.

In this case, even if the magnitude of the voltage input to the air conditioner 30 fluctuates, the voltage input to the air conditioner 30 is adjusted. Accordingly, it is possible to suppress the input of a voltage deviating from the range of the maximum leading value Ve or more and the maximum lagging value Vc or less to the air conditioner 30, as compared to a configuration in which the air conditioner 30 does not perform an operation according to the magnitude of the input voltage.

Further, in the internal mode, the control section performs first control for causing the supply unit 340 to suppress the harmonic current generated from the air conditioner 30 or second control for performing the first control and causing the supply unit 340 to supply the fundamental reactive power in accordance with the magnitude of the input voltage. Examples of the first control include control in a case where the adjustment determination unit 335 determines not to adjust the voltage input to the air conditioner 30. Examples of the second control include control in a case where the adjustment determination unit 335 determines to adjust the voltage input to the air conditioner 30.

In this case, even when it is necessary to suppress the flow of harmonic current from the air conditioner 30 but it is not necessary to supply the fundamental reactive power to the power receiving point 30P of the air conditioner 30, it is possible to prevent the fundamental reactive power from being supplied to the power receiving point 30P.

In the internal mode, the control section performs the first control when the magnitude of the input voltage does not satisfy a predetermined condition, and performs the second control when the magnitude of the input voltage satisfies the condition. Examples of the predetermined condition include the adjustment condition.

In this case, when causing the supply unit 340 to suppress the flow of harmonic current from the air conditioner 30, whether to cause the supply unit 340 to supply the fundamental reactive power to the power receiving point 30P of the air conditioner 30 can be switched in accordance with the magnitude of the input voltage.

The mode determination unit 334 further has, in the internal mode, a first mode for causing the supply unit 340 to supply the fundamental reactive power in accordance with the magnitude of the input voltage when the magnitude of the input voltage satisfies a predetermined condition, and a second mode for causing the supply unit 340 not to supply the fundamental reactive power in accordance with the magnitude of the input voltage even when the magnitude of the input voltage satisfies the condition. Examples of the predetermined condition include the adjustment condition. Examples of the first mode include the voltage adjustment mode. Examples of the second mode include the non-voltage adjustment mode.

In this case, it is possible to suppress the use of the supply unit 340 to supply the fundamental reactive power, as compared to a configuration in which the supply unit 340 always supplies the fundamental reactive power in accordance with the magnitude of the input voltage when the magnitude of the input voltage satisfies the adjustment condition.

Further, in the internal mode, the mode determination unit 334 switches to the first mode or the second mode in accordance with the period of time.

In this case, it is possible to suppress the use of the supply unit 340 to supply the fundamental reactive power, as compared to a configuration in which the supply unit 340 supplies the fundamental reactive power in accordance with the magnitude of the input voltage regardless of the period of time.

Further, in the internal mode, the mode determination unit 334 switches to the first mode or the second mode in accordance with the relationship between the period of time and the operation of the supply unit 340.

In this case, it is possible to suppress the use of the supply unit 340 to supply the fundamental reactive power, as compared to a configuration in which the supply unit 340 supplies the fundamental reactive power in accordance with the magnitude of the input voltage regardless of the relationship between the period of time and the operation of the supply unit 340.

Further, in the internal mode, the mode determination unit 334 switches to the first mode or the second mode in accordance with the position information acquired by the acquisition unit 331.

In this case, it is possible to suppress the use of the supply unit 340 to supply the fundamental reactive power, as compared to a configuration in which the supply unit 340 supplies the fundamental reactive power in accordance with the magnitude of the input voltage regardless of a position related to the air conditioner 30.

Further, in the internal mode, the control section controls the supply unit 340 to supply the fundamental reactive power in accordance with the suppression of the harmonic by the supply unit 340.

In this case, it is possible to reduce the influence of the supply of the fundamental reactive power from the supply unit 340 on the suppression of the harmonic current by the supply unit 340, as compared to a configuration in which the supply unit 340 is controlled to supply the fundamental reactive power regardless of the suppression of the harmonic current by the supply unit 340.

Further, in the internal mode, the supply amount determination unit 339 determines an index related to the fundamental reactive power to be supplied by the supply unit 340 in accordance with the capacity remaining in the supply unit 340 for the supply of the fundamental reactive power in a case of the suppression of the harmonic current by the supply unit 340.

In this case, it is possible to adjust the voltage input to the air conditioner 30 while ensuring the capacity of the supply unit 340 required for suppression of the harmonic current.

In the internal mode, the control section performs first control for causing the supply unit 340 to suppress the harmonic generated from the air conditioner 30 and third control for causing the supply unit 340 to supply the fundamental reactive power in accordance with the magnitude of the input voltage, prioritizes the first control over the third control when a first condition defined for the magnitude of the input voltage is satisfied and a second condition defined for the magnitude of the input voltage is not satisfied, and prioritizes the third control over the first control when the second condition is satisfied. Examples of the first condition include the adjustment condition. Examples of the second condition include the priority condition.

In this case, which of the control for causing the supply unit 340 to suppress the harmonic current generated from the air conditioner 30 and the control for causing the supply unit 340 to supply the fundamental reactive power in accordance with the magnitude of the input voltage to prioritize can be switched in accordance with the magnitude of the input voltage.

Further, in the internal mode, the supply amount determination unit 339 determines an index related to the fundamental reactive power to be supplied by the supply unit 340 in accordance with the period of time related to the supply of the fundamental reactive power from the supply unit 340.

In this case, it is possible to adjust the voltage input to the air conditioner 30 in accordance with the degree of adjustment corresponding to the period of time related to the supply of the fundamental reactive power from the supply unit 340.

Further, in the internal mode, the supply amount determination unit 339 determines an index related to the fundamental reactive power to be supplied by the supply unit 340 in accordance with the position information acquired by the acquisition unit 331.

In this case, it is possible to adjust the voltage input to the air conditioner 30 in accordance with the degree of adjustment corresponding to a position related to the air conditioner 30.

Further, in the internal mode, when the input voltage identified from the voltage information is equal to or less than a predetermined value, the suppression unit 341 suppresses the consumption of the active power by the air conditioner 30. Examples of the predetermined value include the maximum leading value Ve.

In this case, it is possible to suppress the input of a voltage less than the maximum leading value Ve to the air conditioner 30, as compared to a configuration in which the air conditioner 30 adjusts the voltage input to the air conditioner 30 only by the supply of the fundamental reactive power.

The voltage information is information created from the result of detection of the voltage across the air conditioner 30, the detection being performed by the air conditioning sensor 30S.

In this case, it is possible for the air conditioner 30 to implement the supply of the fundamental reactive power corresponding to the magnitude of the input voltage without using a detection section different from the air conditioner 30 to detect the voltage across the air conditioner 30.

The supply section is the AF 33 that suppresses the harmonic current generated by the operation of the power conversion device 32.

In this case, it is possible to implement the supply of the fundamental reactive power to the power receiving point 30P of the air conditioner 30 even when the adjustment unit 31 and the power conversion device 32 are not in operation.

The fundamental reactive power to be supplied by the supply unit 340 is determined in advance in accordance with the magnitude of the input voltage.

In this case, it is possible to prevent the supply unit 340 from approaching the operation limit, as compared to a configuration in which the amount of the fundamental reactive power to be supplied from the supply unit 340 is increased if the voltage input to the air conditioner 30 is not adjusted even when the supply unit 340 supplies the fundamental reactive power.

The AF 33 further has an external mode for supplying the fundamental reactive power from the supply unit 340 to the power receiving point 30P on the basis of the adjustment-required index.

In this case, it is possible to adjust the voltage input to the air conditioner 30 in a mode according to the situation from among the internal mode and the external mode.

Further, the AF 33 performs control in the internal mode or the external mode in accordance with a condition defined for the adjustment-required index.

In this case, it is possible to adjust the voltage input to the air conditioner 30 in a mode according to the situation for the adjustment-required index from among the internal mode and the external mode.

The condition defined for the adjustment-required index is defined for the acquisition of the adjustment-required index using the acquisition unit 331.

In this case, it is possible to adjust the voltage input to the air conditioner 30 in a mode according to the situation for the acquisition of the adjustment-required index using the acquisition unit 331 from among the internal mode and the external mode.

When switching from the external mode to the internal mode, the AF 33 determines the reactive power index on the basis of the adjustment-required index.

In this case, it is possible to associate the supply of the fundamental reactive power using the supply unit 340 in the external mode with the supply of the fundamental reactive power using the supply unit 340 in the internal mode.

Further, when switching from the external mode to the internal mode, the AF 33 determines the reactive power index in accordance with the relationship between the adjustment-required index and the reference index.

In this case, the supply of the fundamental reactive power using the supply unit 340 in the external mode and the supply of the fundamental reactive power using the supply unit 340 in the internal mode can be associated with each other in accordance with the relationship between the adjustment-required index and the reference index.

In another aspect, the mode control unit 503, the index calculation unit 504, and the instruction unit 505 of the control server 50 according to the present disclosure have an internal mode for supplying, in accordance with the magnitude of an input voltage input to the air conditioner 30, the fundamental reactive power from the air conditioner 30 to the power receiving point 30P of the input voltage in the air conditioner 30, and an external mode for supplying the fundamental reactive power from the air conditioner 30 to the power receiving point 30P on the basis of the electric-line information.

In this case, it is possible to adjust the voltage input to the air conditioner 30 in a mode according to the situation from among the internal mode and the external mode.

The individual configurations described above are not limited to those in the embodiments described above and may be changed without departing from the gist of the disclosure. In other words, it will be understood that various changes in form and details may be made without departing from the spirit and scope of the claims.

The configurations described above are non-limiting, and some of the individual configurations described above may be omitted or any other function may be added to the individual configurations described above.

Reference Signs List

1 voltage adjustment system, 10 power plant, 20 power consuming facility, 20S facility sensor, 30 air conditioner, 30S air conditioning sensor, 31 adjustment unit, 32 power conversion device, 33 AF

**Claims**

1. An air conditioner comprising:

   a voltage information acquisition section that acquires voltage information related to an input voltage input to the air conditioner;
   a supply section that supplies fundamental reactive power to a power receiving point of the input voltage in the air conditioner; and
   a control section that controls the supply section,
   wherein the control section has a first supply mode for supplying the fundamental reactive power from the supply section to the power receiving point in accordance with a magnitude of the input voltage identified from the voltage information acquired by the voltage information acquisition section.

2. The air conditioner according to claim 1, wherein the supply section suppresses a harmonic generated from the air conditioner, and

wherein in the first supply mode, the control section performs first control for causing the supply section to suppress the harmonic generated from the air conditioner or second control for performing the first control and causing the supply section to supply the fundamental reactive power in accordance with the magnitude of the input voltage.

3. The air conditioner according to claim 2, wherein in the first supply mode, the control section performs the first control when the magnitude of the input voltage does not satisfy a predetermined condition, and performs the second control when the magnitude of the input voltage satisfies the condition.

4. The air conditioner according to claim 1, wherein the control section further has, in the first supply mode, a first mode for causing the supply section to supply the fundamental reactive power in accordance with the magnitude of the input voltage when the magnitude of the input voltage satisfies a predetermined condition, and a second mode for causing the supply section not to supply the fundamental reactive power in accordance with the magnitude of the input voltage even when the magnitude of the input voltage satisfies the condition.

5. The air conditioner according to claim 4, wherein in the first supply mode, the control section switches to the first mode or the second mode in accordance with a period of time.

6. The air conditioner according to claim 5, wherein in the first supply mode, the control section switches to the first mode or the second mode in accordance with a relationship between the period of time and an operation of the supply section.

7. The air conditioner according to claim 4, further comprising a position information acquisition section that acquires position information related to a position of the air conditioner,

wherein in the first supply mode, the control section switches to the first mode or the second mode in accordance with the position information acquired by the position information acquisition section.

8. The air conditioner according to claim 1, wherein the supply section suppresses a harmonic generated from the air conditioner, and

wherein in the first supply mode, the control section controls the supply section to supply the fundamental reactive power in accordance with suppression of the harmonic by the supply section.

9. The air conditioner according to claim 8, wherein in the first supply mode, the control section determines an index related to the fundamental reactive power to be supplied by the supply section, in accordance with a capacity remaining in the supply section for supply of the fundamental reactive power in a case of the suppression of the harmonic by the supply section.

10. The air conditioner according to claim 1, wherein the supply section suppresses a harmonic generated from the air conditioner, and

wherein in the first supply mode, the control section
performs first control for causing the supply section to suppress the harmonic generated from the air conditioner and third control for causing the supply section to supply the fundamental reactive power in accordance with the magnitude of the input voltage,
prioritizes the first control over the third control when a first condition defined for the magnitude of the input voltage is satisfied and a second condition defined for the magnitude of the input voltage is not satisfied, and prioritizes the third control over the first control when the second condition is satisfied.

11. The air conditioner according to claim 1, wherein in the first supply mode, the control section determines an index related to the fundamental reactive power to be supplied by the supply section in accordance with a period of time related to supply of the fundamental reactive power from the supply section.

12. The air conditioner according to claim 1, further comprising a position information acquisition section that acquires position information related to a position of the air conditioner,

wherein in the first supply mode, the control section determines an index related to the fundamental reactive power to be supplied by the supply section in accordance with the position information acquired by the position information acquisition section.

**13.** The air conditioner according to claim 1, wherein in the first supply mode, the control section suppresses consumption of active power by the air conditioner when the input voltage identified from the voltage information is equal to or less than a predetermined value.

**14.** The air conditioner according to claim 1, further comprising a detection section that detects a voltage across the air conditioner,
wherein the voltage information is information created from a result of detection of the voltage across the air conditioner, the detection being performed by the detection section.

**15.** The air conditioner according to claim 1, further comprising:

an adjustment unit that adjusts a temperature or a humidity; and
a conversion unit that converts power supplied to the air conditioner and supplies the power to the adjustment unit,
wherein the supply section is an active filter that suppresses a harmonic generated by an operation of the conversion unit.

**16.** The air conditioner according to claim 1, wherein the fundamental reactive power to be supplied by the supply section is determined in advance in accordance with the magnitude of the input voltage.

**17.** The air conditioner according to claim 1, further comprising a power information acquisition section that acquires power information related to apparent power to be output from the air conditioner,
wherein the control section further has a second supply mode for supplying the fundamental reactive power from the supply section to the power receiving point on the basis of the power information.

**18.** The air conditioner according to claim 17, wherein the control section performs control in the first supply mode or the second supply mode in accordance with a condition determined for the power information.

**19.** The air conditioner according to claim 18, wherein the condition is determined for acquisition of the power information, the acquisition being performed by the power information acquisition section.

**20.** The air conditioner according to claim 17, wherein in a case of switching from the second supply mode to the first supply mode, the control section causes the supply section to supply the fundamental reactive power to the power receiving point on the basis of mode information related to the second supply mode.

**21.** The air conditioner according to claim 20, wherein in a case of switching from the second supply mode to the first supply mode, the control section determines an index related to the fundamental reactive power to be supplied from the supply section to the power receiving point in accordance with a relationship between the mode information and an index related to the supply in the first supply mode determined in accordance with the magnitude of the input voltage.

**22.** A control system comprising:

an acquisition section that acquires electrical path information related to a voltage of an electrical path of a power distribution system electrically connected to an air conditioner through a power distribution transformer; and
a control section having a first supply mode for supplying, in accordance with a magnitude of an input voltage input to the air conditioner, fundamental reactive power from the air conditioner to a power receiving point of the input voltage in the air conditioner, and a second supply mode for supplying the fundamental reactive power from the air conditioner to the power receiving point on the basis of the electrical path information.

FIG.1

POWER PLANT — 10

FACILITY SENSOR — 20P, 20S

LOAD — 40, 30, 20

ADJUSTMENT UNIT — 31

POWER CONVERSION DEVICE — 32

AIR CONDITIONING SENSOR — 30S, 30P, 321

ACQUISITION UNIT — 331

SUPPLY UNIT — 340

SUPPRESSION UNIT — 341

STORAGE UNIT — 332

SUPPLY AMOUNT DETERMINATION UNIT — 339

MEASUREMENT UNIT — 333

INPUT VOLTAGE IDENTIFICATION UNIT — 338

MODE DETERMINATION UNIT — 334

REACTIVE POWER IDENTIFICATION UNIT — 337

ADJUSTMENT DETERMINATION UNIT — 335

HARMONIC IDENTIFICATION UNIT — 336

33

EP 4 415 239 A1

FIG.2

| INPUT VOLTAGE | OPERATING TIME | POSITION INFORMATION | MODE | CAPACITY | REDUCTION-REQUIRED CURRENT |
|---|---|---|---|---|---|
| V1 | T1 | P1 | ADJUSTMENT | C1 | N1 |

EP 4 415 239 A1

FIG.3

EP 4 415 239 A1

FIG.4

FIG.5

EP 4 415 239 A1

FIG.6

```
              ┌──────────┐
              │  START   │
              └────┬─────┘
                   │            S201
          YES   ╱──┴──╲
       ┌───────  UNNECESSARY
       │         PERIOD?
       │         ╲─────╱
       │            │ NO
       │            │          S202
       │         ╱──┴──╲       NO
       │      UPPER LIMIT TIME? ────────────────┐
       │         ╲─────╱                         │
       │            │ YES                        │
       │            │          S203              │
       │         ╱──┴──╲       YES               │
       │       NECESSARY ──────────────────┐     │
       │        PERIOD?                     │     │
       │         ╲─────╱                    │     │
       │            │ NO                    │     │
       └────────────┤                       │     │
                    │          S204         │     │
                 ╱──┴──╲       YES          │     │
               NECESSARY ──────────────────┤     │
               POSITION?                    │     │
                 ╲─────╱                    │     │
                    │ NO   S206             │  S205│
       ┌────────────┴──────────┐   ┌────────┴─────┴────────┐
       │ NON-VOLTAGE ADJUSTMENT│   │ VOLTAGE ADJUSTMENT    │
       │        MODE           │   │       MODE            │
       └───────────┬───────────┘   └──────────┬────────────┘
                   │                           │
                   ├───────────────────────────┘
              ┌────┴─────┐
              │   END    │
              └──────────┘
```

FIG.7

START

S301
VOLTAGE ADJUSTMENT MODE? — NO

YES

S302
SUBTRACTION VALUE > 0? — NO

YES

IDENTIFY INPUT VOLTAGE — S303

S304
ADJUSTMENT CONDITION SATISFIED? — NO

YES

CALCULATE ADJUSTMENT-REQUIRED POWER — S305

DETERMINE REACTIVE POWER INDEX — S306

PROVIDE INSTRUCTION TO SUPPLY FUNDAMENTAL REACTIVE POWER — S307

SUPPLY FUNDAMENTAL REACTIVE POWER — S308

S309
INPUT VOLTAGE ≤ Ve? — NO

YES S310

PROVIDE INSTRUCTION TO DECREASE POWER TO BE SUPPLIED

END

**FIG.8**

```
                    ( START )
                        │
                        ▼
            ┌───────────────────────┐  S401
    NO  ◄───┤  VOLTAGE ADJUSTMENT    │
            │        MODE?           │
            └───────────────────────┘
                        │ YES
                        ▼
            ┌───────────────────────┐  S402
            │   IDENTIFY INPUT VOLTAGE │
            └───────────────────────┘
                        │
                        ▼
            ┌───────────────────────┐  S403
    NO  ◄───┤  ADJUSTMENT CONDITION  │
            │       SATISFIED?       │
            └───────────────────────┘
                        │ YES
                        ▼
            ┌───────────────────────┐  S404
            │  CALCULATE ADJUSTMENT- │
            │    REQUIRED POWER      │
            └───────────────────────┘
                        │
                        ▼
            ┌───────────────────────┐  S405
            │   PRIORITY CONDITION   ├──── NO ────┐
            │       SATISFIED?       │            │
            └───────────────────────┘            │
                        │ YES      S406           │          S407
                        ▼                         ▼
    ┌───────────────────────────┐   ┌───────────────────────────┐
    │ DETERMINE REACTIVE POWER  │   │ DETERMINE REACTIVE POWER  │
    │ INDEX WITH PRIORITIZATION │   │ INDEX WITH PRIORITIZATION │
    │  OF VOLTAGE ADJUSTMENT    │   │ OF HARMONIC SUPPRESSION   │
    └───────────────────────────┘   └───────────────────────────┘
                        │                         │
                        │◄────────────────────────┘
                        ▼
            ┌───────────────────────┐  S408
            │  PROVIDE INSTRUCTION TO │
            │   SUPPLY FUNDAMENTAL   │
            │    REACTIVE POWER      │
            └───────────────────────┘
                        │
                        ▼
            ┌───────────────────────┐  S409
            │  SUPPLY FUNDAMENTAL    │
            │    REACTIVE POWER      │
            └───────────────────────┘
                        │
                        ▼
            ┌───────────────────────┐  S410
            │        LESS            │
            │  THAN ADJUSTMENT-      ├──── NO ────┐
            │   REQUIRED POWER?      │            │
            └───────────────────────┘            │
                        │ YES                     │
                        ▼                         │
            ┌───────────────────────┐  S411       │
            │  PROVIDE INSTRUCTION TO │           │
            │    DECREASE POWER       │           │
            │    TO BE SUPPLIED       │           │
            └───────────────────────┘            │
                        │◄────────────────────────┘
                        ▼
                    (  END  )
```

FIG.9

EP 4 415 239 A1

FIG.10

FIG.11

# FIG.12

```
              ┌──────────────┐
              │    START     │
              └──────┬───────┘
                     │              S501
                     ▼
            ◇────────────────────◇    NO
            │ INFORMATION CONDITION │──────────────────┐
            │     SATISFIED?       │                   │
            ◇────────┬───────────◇                     │
                  YES │        S502                     │  S506
                     ▼                                  ▼
            ┌──────────────────┐            ┌──────────────────┐
            │  EXTERNAL MODE   │            │  INTERNAL MODE   │
            └────────┬─────────┘            └────────┬─────────┘
                     │          S503                 │
                     ▼                               │
       NO   ◇──────────────────◇                     │
     ┌──────│   ADJUSTMENT     │                     │
     │      │   REQUIRED?      │                      │
     │      ◇────────┬─────────◇                      │
     │            YES │     S504                       │
     │               ▼                                │
     │      ┌──────────────────────┐                  │
     │      │ DETERMINE ADJUSTMENT-│                  │
     │      │   REQUIRED INDEX     │                  │
     │      └────────┬─────────────┘                  │
     │               │         S505                    │         S507
     │               ▼                                ▼
     │      ┌──────────────────┐            ┌──────────────────┐
     │      │ TRANSMIT EXTERNAL│            │ TRANSMIT INTERNAL│
     │      │   INSTRUCTION    │            │   INSTRUCTION    │
     │      └────────┬─────────┘            └────────┬─────────┘
     │               │                               │
     └───────────────┼───────────────────────────────┘
                     ▼
              ┌──────────────┐
              │     END      │
              └──────────────┘
```

FIG.13

```
                    ┌──────────────┐
                    │    START     │
                    └──────┬───────┘
                           │
                           ▼            S601
                    ╱────────────╲
                  ╱   EXTERNAL     ╲   NO
                 ⟨  INSTRUCTION?    ⟩──────────────┐
                  ╲                ╱               │
                    ╲────────────╱                │
                           │ YES                  │
                           │     S602             │    S605
                           ▼                      ▼
                    ┌──────────────┐      ┌──────────────┐
                    │ EXTERNAL MODE│      │ INTERNAL MODE│
                    └──────┬───────┘      └──────┬───────┘
                           │                     │
                           │    S603             │        S606
                           ▼                     ▼
                 ┌──────────────────┐      ╱────────────╲   YES
                 │RESTRICT ADJUSTMENT│    ⟨  SWITCHED?    ⟩──────────┐
                 │     PROCESS       │     ╲            ╱            │
                 └────────┬──────────┘       ╲────────╱             │   S607
                          │                      │ NO               ▼
                          │    S604              │    ┌──────────────────────────┐
                          ▼                      │    │ DETERMINE REACTIVE POWER │
                 ┌──────────────────┐           │    │INDEX BASED ON ADJUSTMENT-│
                 │SUPPLY APPARENT POWER│        │    │ REQUIRED INDEX IN NEXT   │
                 └────────┬──────────┘          │    │  ADJUSTMENT PROCESS      │
                          │                     │    └───────────┬──────────────┘
                          │◄────────────────────┴────────────────┘
                          ▼
                 ┌──────────────┐
                 │     END      │
                 └──────────────┘
```

FIG.14

EP 4 415 239 A1

FIG.15

EP 4 415 239 A1

## INTERNATIONAL SEARCH REPORT

International application No.

**PCT/JP2022/036255**

### A. CLASSIFICATION OF SUBJECT MATTER

*H02M 1/12*(2006.01)i; *F24F 11/65*(2018.01)i; *G05F 1/70*(2006.01)i; *H02J 3/16*(2006.01)i; *H02M 7/48*(2007.01)i
FI: H02M1/12; F24F11/65; H02J3/16; H02M7/48 Y; G05F1/70 L

According to International Patent Classification (IPC) or to both national classification and IPC

### B. FIELDS SEARCHED

Minimum documentation searched (classification system followed by classification symbols)

H02M1/12; F24F11/65; G05F1/70; H02J3/16; H02M7/48

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-2970 A (DAIKIN INDUSTRIES, LTD.) 07 January 2021 (2021-01-07) entire text, all drawings | 1-22 |
| A | JP 2016-116330 A (DAIKIN INDUSTRIES, LTD.) 23 June 2016 (2016-06-23) entire text, all drawings | 1-22 |
| A | JP 2018-207565 A (DAIKIN INDUSTRIES, LTD.) 27 December 2018 (2018-12-27) entire text, all drawings | 1-22 |
| A | JP 2000-207043 A (SAMSUNG ELECTRONICS CO LTD) 28 July 2000 (2000-07-28) entire text, all drawings | 1-22 |
| A | JP 8-140267 A (TOSHIBA CORP) 31 May 1996 (1996-05-31) entire text, all drawings | 1-22 |
| A | JP 2018-57201 A (DAIKIN INDUSTRIES, LTD.) 05 April 2018 (2018-04-05) entire text, all drawings | 1-22 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **25 November 2022** | **06 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/036255**

| Patent document cited in search report | | | Publication date (day/month/year) | Patent family member(s) | | | Publication date (day/month/year) |
|---|---|---|---|---|---|---|---|
| JP | 2021-2970 | A | 07 January 2021 | US | 2022/0113058 | A1 | |
| | | | | WO | 2020/262051 | A1 | |
| | | | | EP | 3985476 | A1 | |
| | | | | CN | 114008903 | A | |
| JP | 2016-116330 | A | 23 June 2016 | (Family: none) | | | |
| JP | 2018-207565 | A | 27 December 2018 | (Family: none) | | | |
| JP | 2000-207043 | A | 28 July 2000 | DE | 19920973 | A1 | |
| | | | | KR | 2000-0050367 | A | |
| | | | | CN | 1259643 | A | |
| JP | 8-140267 | A | 31 May 1996 | (Family: none) | | | |
| JP | 2018-57201 | A | 05 April 2018 | US | 2019/0238046 | A1 | |
| | | | | WO | 2018/061403 | A1 | |
| | | | | EP | 3511797 | A1 | |
| | | | | CN | 109643138 | A | |

Form PCT/ISA/210 (patent family annex) (January 2015)

**EP 4 415 239 A1**

REFERENCES CITED IN THE DESCRIPTION

**Patent documents cited in the description**

- JP 6299831 B